# EUROPEAN PATENT APPLICATION

(11) **EP 2 578 920 A1**
(43) Date of publication of application: **10.04.2013**
(21) Application number: 10852093.3
(22) Date of filing: 26.05.2010
(51) Int. Cl.: F21S 2/00

(54) **ILLUMINATION DEVICE**

(71) Applicant: S.K.G. Co., Ltd., Aichi 465-0095 (JP)
(72) Inventor: SAKAMOTO, Mitsuhide, Ichinomiya-shi Aichi 491-0825 (JP); YAGI, Toshiaki, Ichinomiya-shi Aichi 491-0825 (JP); ANDO, Junichi, Ichinomiya-shi Aichi 491-0825 (JP)
(74) Representative: Polypatent
(86) International application number: PCT/JP2010/003537
(87) International publication number: WO 2011/148420

(57) **Abstract**

This invention is for providing an illumination device obtainable of a wide angle light distribution characteristics required for a spot type or a light bulb type in compliance with environments of an institution or user's favorite, capable of outputting adequately diffused light from the illumination device, with excellent design feature. The invented illumination device includes an electric power receiving section supplied with electric power from an external portion, a power source section connected to the electric power receiving section, converting the electric power into prescribed drive power, a light source section connected to the power source section, emitting light according the drive power, a housing section containing the light source section, and a light guiding section arranged to project from the housing section, outputting, from a branched outgoing surface, the light of the light source section entered from an incident surface.

## Description

### Field of the Invention

This invention relates to an illumination device formed with three-dimensionally arranged light guide plates.

### Description of Related Art

Conventionally, with respect to a light bulb type lamp having plural light emitting elements, a lamp structure has been known, while ensuring assembling easiness, to allow light emitting to be hardly shielded by placing coupling reception members equally away from each light emitting element for preventing light distribution from losing its evenness (see, e.g., Patent Document #1).

With respect to an illumination device having plural semiconductor light sources arranged on a supporting body, an illumination device has been known in which light of light source is inputted and coupled to an assigned light guide with a prescribed angle with respect to a perpendicular plane of the supporting body, in which the light guide has reflecting surfaces and light outgoing surfaces, and in which an envelope surface of the light outgoing surfaces are forming a curving segment (see, e.g., Patent Document #2).

### Prior Art Documents

### Patent Documents

Patent Document #1: Japanese Patent Application Publication No. 2010-033959
Patent Document #2: Japanese Patent Application Publication No. 2006-190684

### Summary of the Invention

With the structures described above, however, a wide angle light distribution feature, required for spot types and light bulb types, cannot be obtained, and those structures are suffer from excessively strong light directivity because diffused light before adequately diffused is outputted from the illumination device with inferior design feature.

In consideration for solving the above mentioned problems, it is an object of the invention to provide an illumination device capable of obtaining wide angle light distribution feature, required for such as spot types and light bulb types, in matching institutional circumstances and user's favorites, as well as of outputting adequately diffused light from the illumination device, with excellent design feature.

### Problems to be solved by the Invention

To solve the above problems, the illumination device according to the invention includes: an electric power receiving section supplied with electric power from an external portion; a power source section connected to the electric power receiving section, converting the electric power into prescribed drive power; a light source section connected to the power source section for emitting light according the drive power; a housing section containing the light source section; and a light guiding section arranged to project from the housing section, outputting, from a branched outgoing surface, the light of the light source section entered from an incident surface.

### Advantages of the invention

With the illumination device according to the invention, the invented device is capable of obtaining wide angle light distribution feature, required for such as spot types and light bulb types, in matching institutional circumstances and user's favorites, as well as of outputting adequately diffused light from the illumination device, with excellent design feature.

### Brief Description of the Drawings

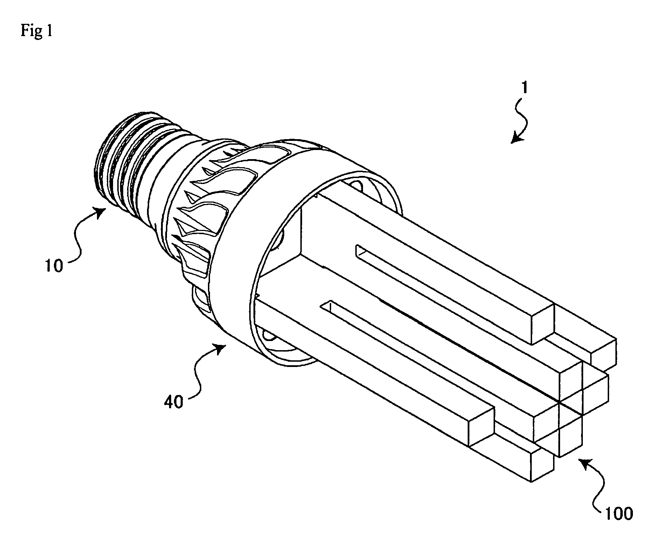

Fig. 1 is a perspective view showing an illumination device according to a first embodiment of the invention.

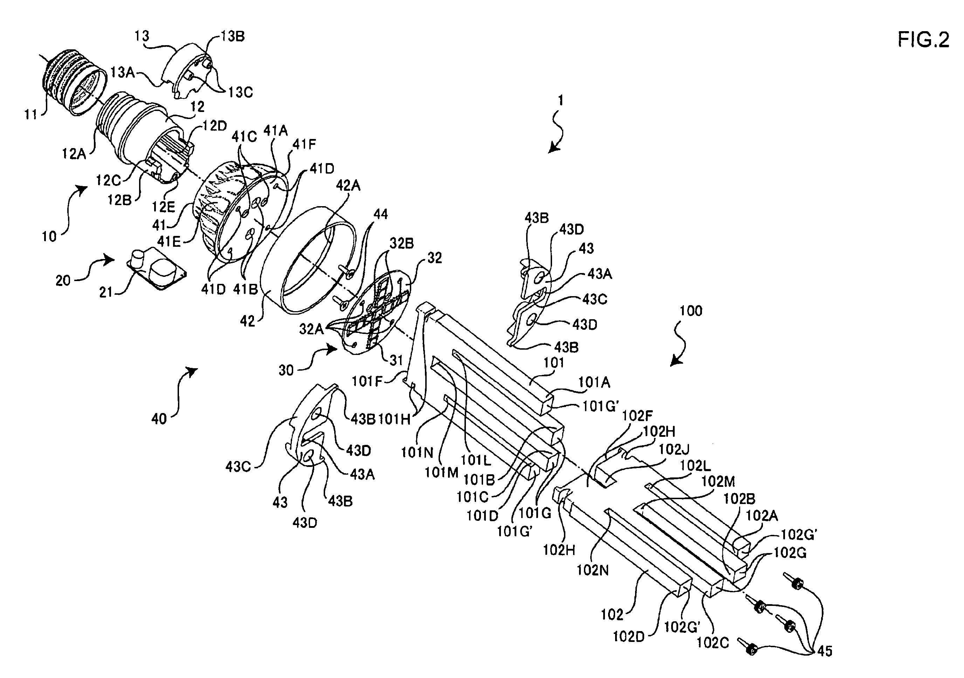

Fig. 2 is an exploded perspective view showing each structure of the first embodiment of the invention.

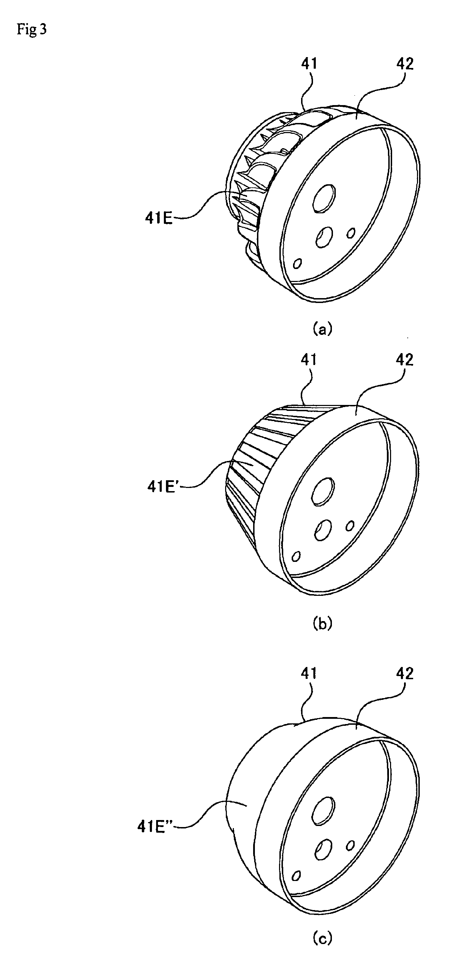

Fig. 3 is a perspective view showing a housing provided at the illumination device according to the first embodiment of the invention; (a) is a perspective view showing a housing formed with plural fins made in curing convex and concave shapes for heat dissipation along an outer periphery; (b) is a perspective view showing a housing formed with plural fins made in convex and concave shapes for heat dissipation along an outer periphery; (c) is a perspective view showing a housing formed with no fin along an outer periphery.

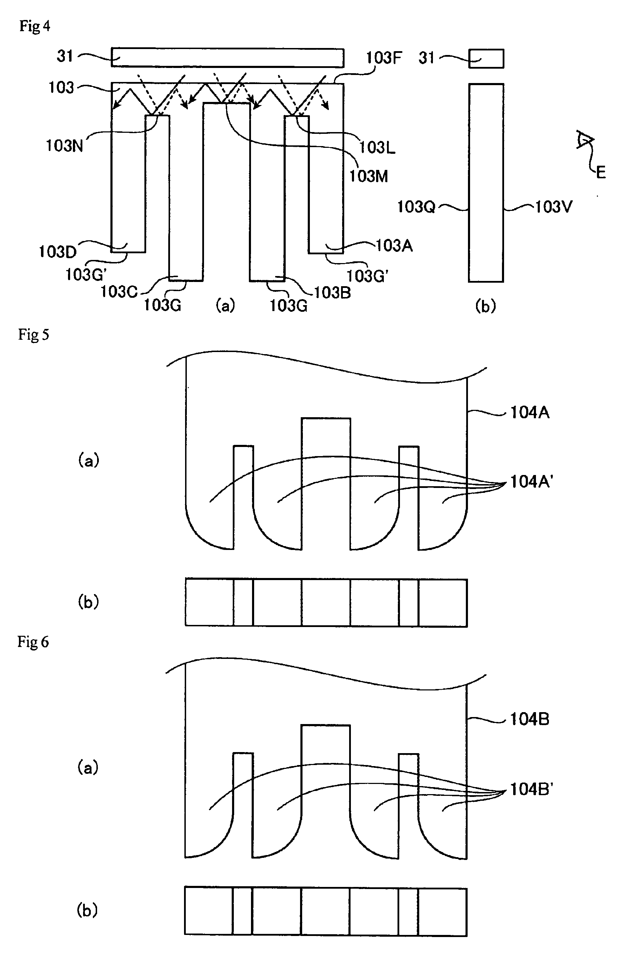

Fig. 4 is a schematic view showing a light guide plate provided at a light guide section of the illumination device according to the first embodiment of the invention, so branched as to form plural light guide pieces at a tip side of outgoing surface and showing a light source arranged adjacent to the light guide plate; (a) is a schematic view showing the light guide plate and the light source from a major surface of the light guide plate; (b) is a schematic view showing a light guide piece located at a center of the light guide plate and the light guide in a manner of a cross section.
Fig. 5 is a schematic view showing a light guide plate formed with a curving surface on an outer side with respect to the light guide pieces branched in a plural number among the light guide plates formed at a light guide section of the illumination device according to the first embodiment of the invention; (a) is a schematic view showing a major surface of the light guide plate; (b) is a schematic view showing tips of the light guide plate.
Fig. 6 is a schematic view showing a light guide plate formed with a curving surface on an inner side with respect to the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.

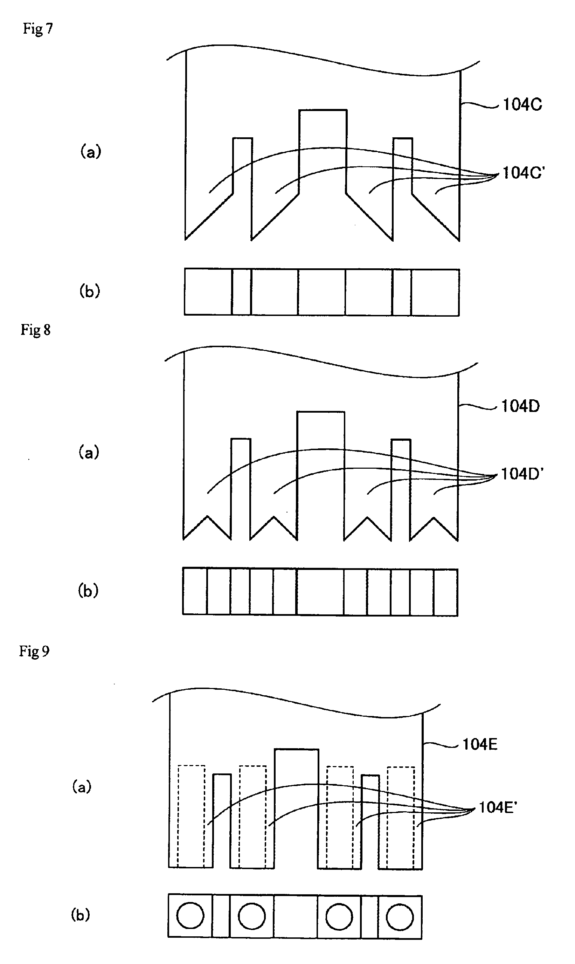

Fig. 7 is a schematic view showing a light guide plate formed with an inclined surface on an inner side with respect to the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.
Fig. 8 is a schematic view showing a light guide plate formed with a recessed tip of the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.
Fig. 9 is a schematic view showing a light guide plate formed with a recess portion made in a cylindrical shape having a prescribed depth at each tip of the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.

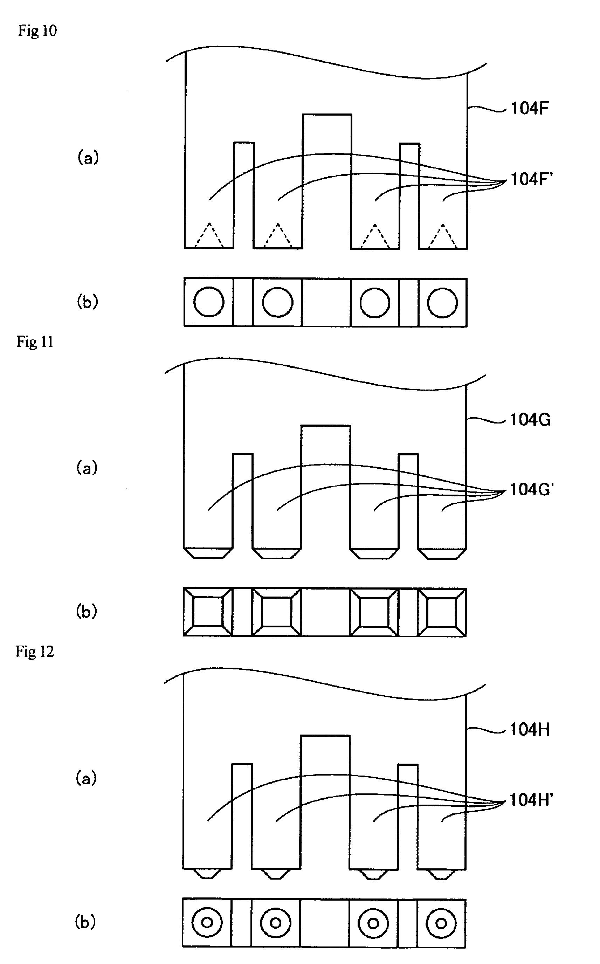

Fig. 10 is a schematic view showing a light guide plate formed with a recess portion made in a cone shape having a prescribed depth at each tip of the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.
Fig. 11 is a schematic view showing a light guide plate with each frustum shaped tip of the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.
Fig. 12 is a schematic view showing a light guide plate with each circular truncated cone shaped tip of the light guide pieces branched in a plural number among the light guide plates formed at the light guide section of the illumination device according to the first embodiment of the invention; (a) is a schematic view showing a major surface of the light guide plate; (b) is a schematic view showing tips of the light guide plate.

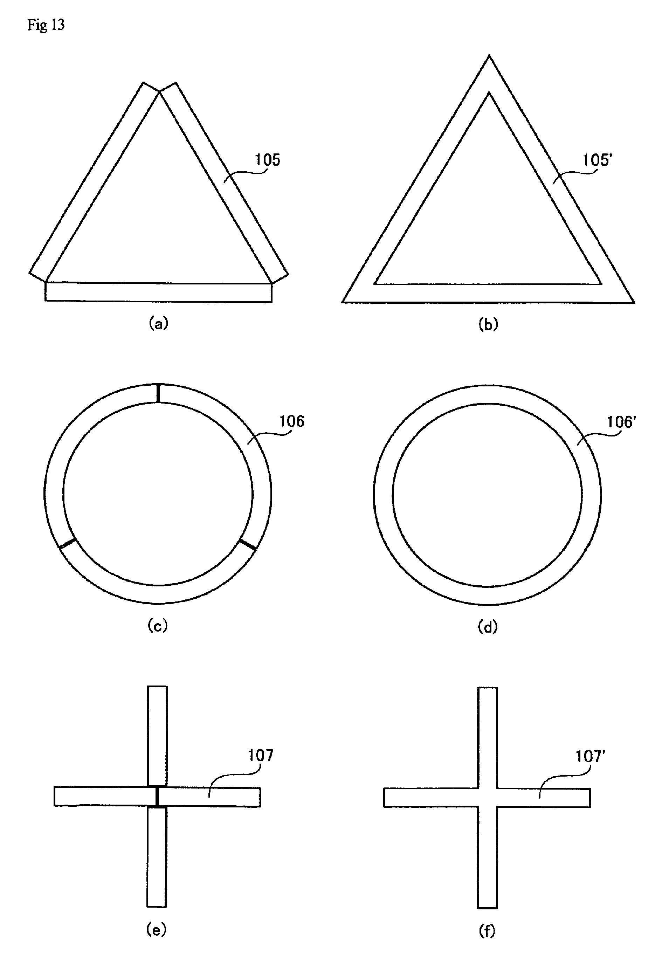

Fig. 13 is a schematic cross section showing a light guide plate corresponding to an applied example formed at the light guide section of the illumination device according to the first embodiment of the invention; (a) is a schematic cross section showing plural light guide plates composed into a trigonal prism shape having a space inside by coupling an end of the light guide plate with an end of another adjacent light guide plate; (b) is a schematic cross section showing a light guide plate molded as a united body into a trigonal prism shape having a space inside; (c) is a cross section showing plural curving light guide plates composed into a cylindrical shape by coupling an end of the curving light guide plate with an end of another adjacent curving light guide plate; (d) is a schematic cross section showing a light guide plate molded as a united body into a cylindrical shape; (e) is a schematic cross section showing plural light guide plates composed into a cross shape; (f) is a schematic cross section showing a light guide plate molded as a united body into a cross shape.

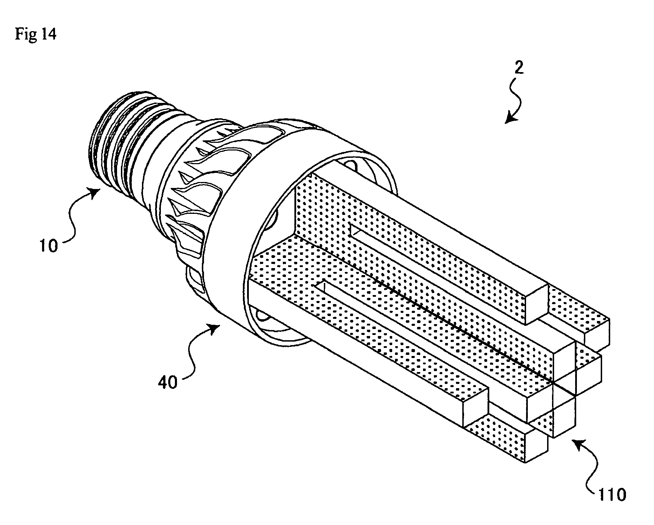

Fig. 14 is a perspective view showing an illumination device according to a second embodiment of the invention.

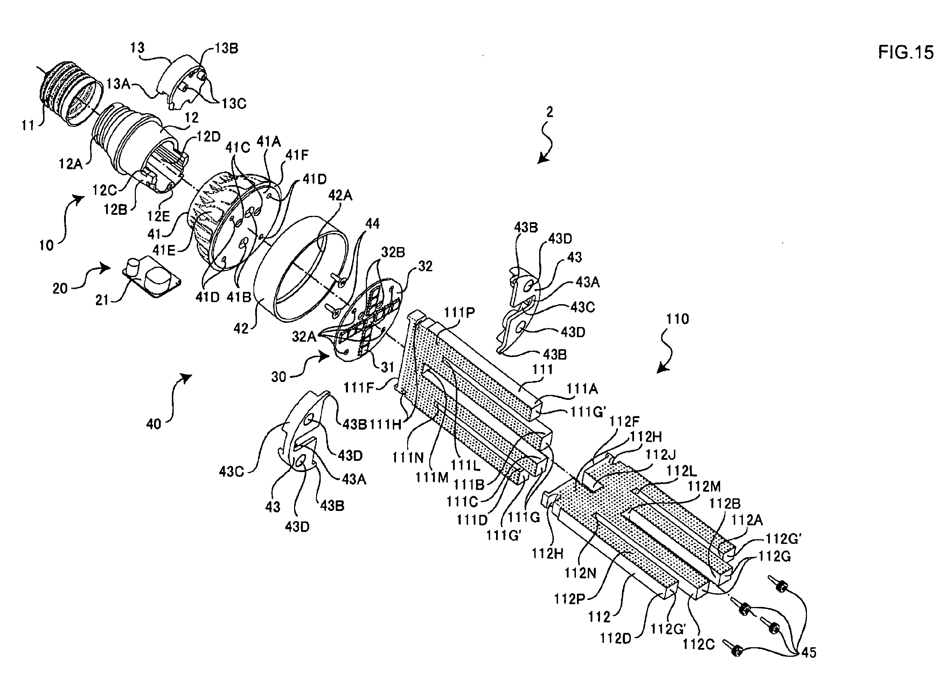

Fig. 15 is an exploded perspective view showing each structure of the second embodiment of the invention.

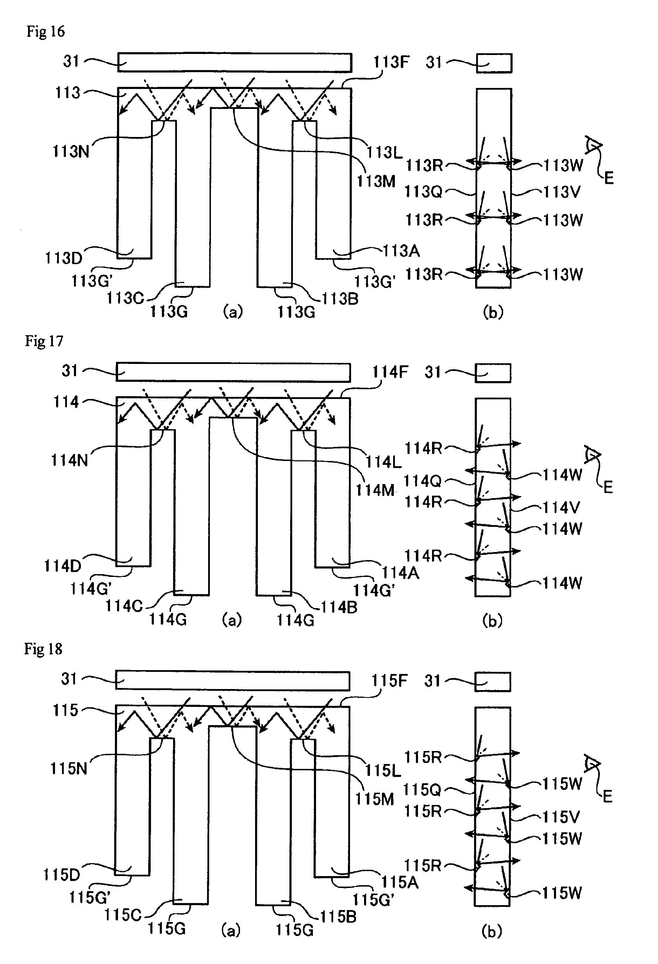

Fig. 16 is a schematic view showing a light guide plate provided at a light guide section of the illumination device according to the second embodiment of the invention, so branched as to form plural light guide pieces at a tip side of outgoing surface and showing a light source arranged adjacent to the light guide plate; (a) is a schematic view showing the light guide plate and the light source from a major surface of the light guide plate; (b) is a schematic cross section showing a central light guide piece of a light guide plate whose major surfaces are formed with a recess pattern at the same positions between the major surfaces and showing a light source.
Fig. 17 is a schematic view showing a light guide plate provided at a light guide section of the illumination device according to the second embodiment of the invention, so branched as to form plural light guide pieces at a tip side of outgoing surface and showing a light source arranged adjacent to the light guide plate; (a) is a schematic view showing the light guide plate and the light source from a major surface of the light guide plate; (b) is a schematic cross section showing a central light guide piece of a light guide plate whose major surfaces are formed with a recess pattern at not the same positions between the major surfaces and showing a light source.
Fig. 18 is a schematic view showing a light guide plate provided at a light guide section of the illumination device according to the second embodiment of the invention, so branched as to form plural light guide pieces at a tip side of outgoing surface and showing a light source arranged adjacent to the light guide plate; (a) is a schematic view showing the light guide plate and the light source from a major surface of the light guide plate; (b) is a schematic cross section showing a central light guide piece of a light guide plate in which a recess pattern is formed stepwise deeper from an incident surface to a tip and showing a light source.

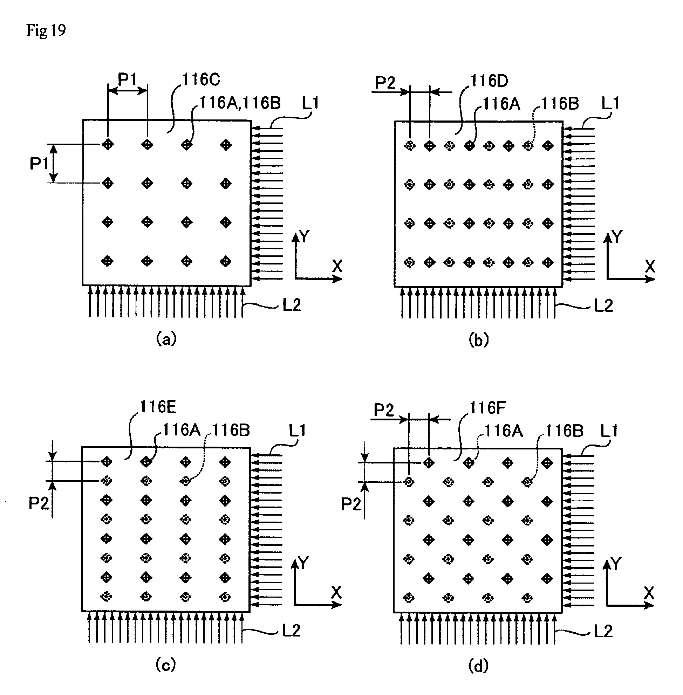

Fig. 19 is a schematic view showing a light guide plate arranged at the illumination device according to the second embodiment of the invention in a state that a pattern formed on one major surface and a pattern formed on the other surface are made transparent; (a) is a schematic view showing a state that a pattern on one major surface is formed at the same position with a pattern on the other major surface; (b) is a schematic view showing a state that a pattern on one major surface is formed at a position shifted a half pitch in an X direction with respect to a pattern on the other major surface; (c) is a schematic view showing a state that a pattern on one major surface is formed at a position shifted a half pitch in a Y direction with respect to a pattern on the other major surface; (d) is a schematic view showing a state that a pattern on one major surface is formed at a position shifted a half pitch in both of the X direction and the Y direction with respect to a pattern on the other major surface.

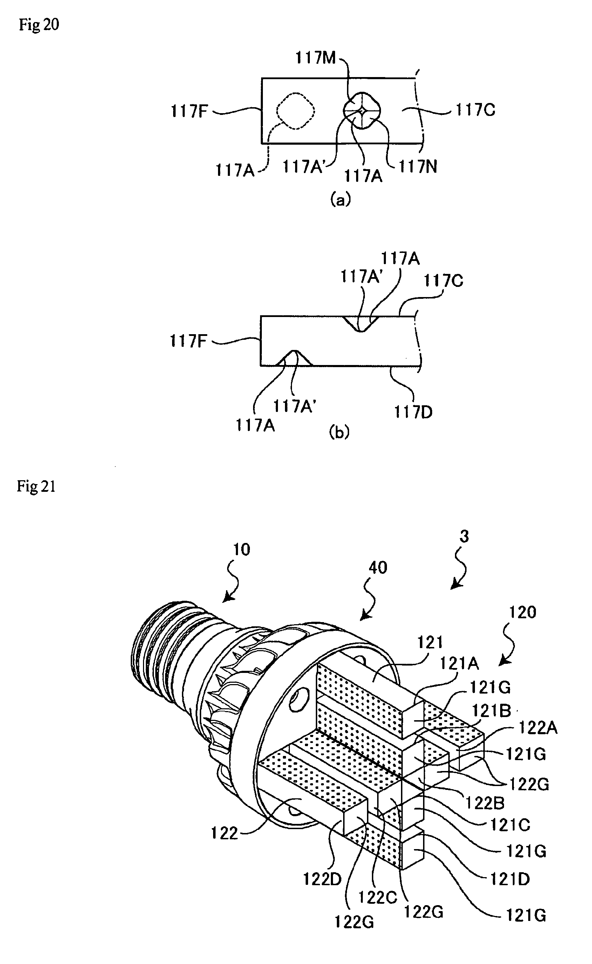

Fig. 20 is a schematic view showing a recess pattern made of a pyramid formed on a light guide plate arranged at the illumination device according to the second embodiment of the invention;
   (a) is a schematic view showing a recess pattern from a major surface of the light guide plate;
   (b) is a schematic view showing a recess pattern from a side surface of the light guide plate.
Fig. 21 is a perspective view showing an illumination device arranged with a light guide section composed with light guide plates formed in a way that plural branched light guide pieces have the same height, according to the second embodiment of the invention.

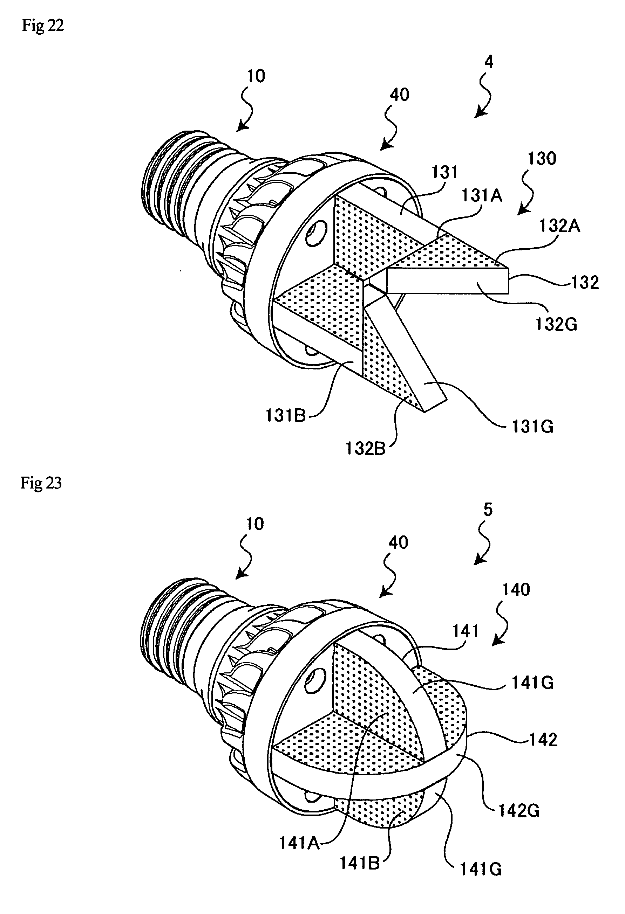

Fig. 22 is a perspective view showing an illumination device arranged with a light guide section composed with light guide plates formed in a way that light guide pieces branched into four portions extending in a cross shape are formed into a trapezoid shape, respectively, according to the second embodiment of the invention.
Fig. 23 is a perspective view showing an illumination device arranged with a light guide section composed with light guide plates formed in a way that three light guide pieces extending in a cross shape are formed into an arc shape , respectively, according to the second embodiment of the invention.

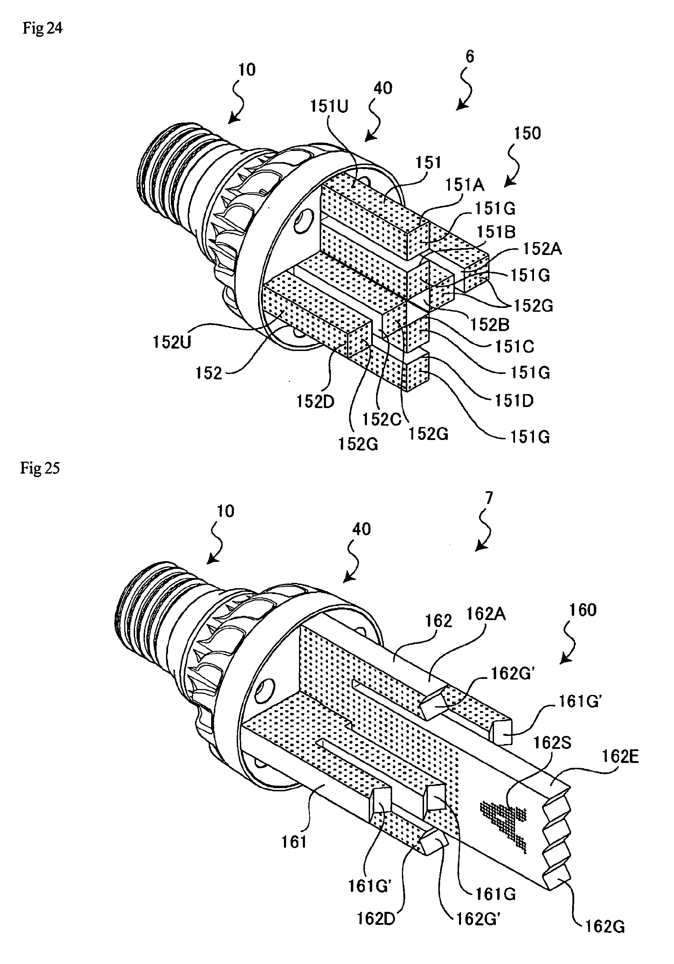

Fig. 24 is a perspective view showing an illumination device arranged with a light guide section composed with light guide plates having tips and side surfaces of the light guide pieces branched in a plural number formed with a recess pattern or projecting pattern, according to the second embodiment of the invention.
Fig. 25 is a perspective view showing an illumination device according to a third embodiment of the invention.

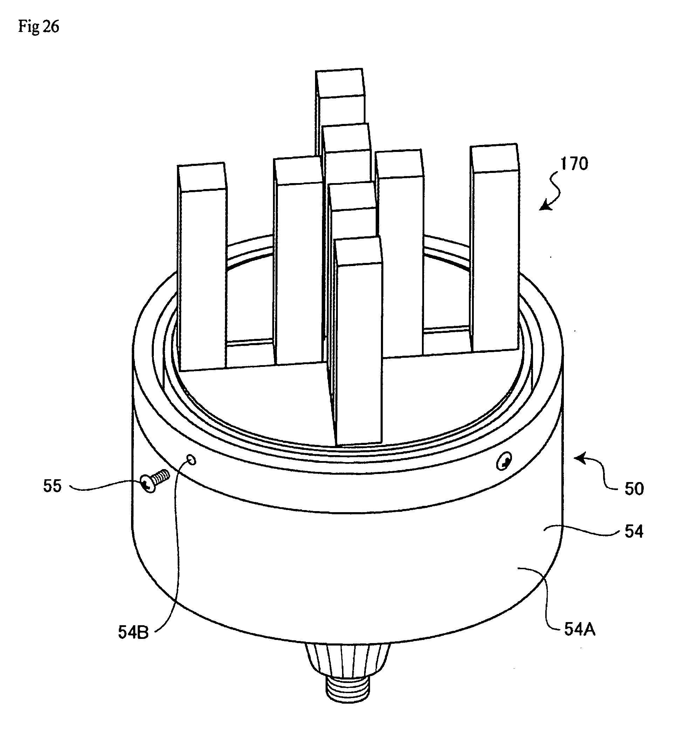

Fig. 26 is a perspective view showing a housing section and a light guide section arranged at the illumination device according to a fourth embodiment of the invention.

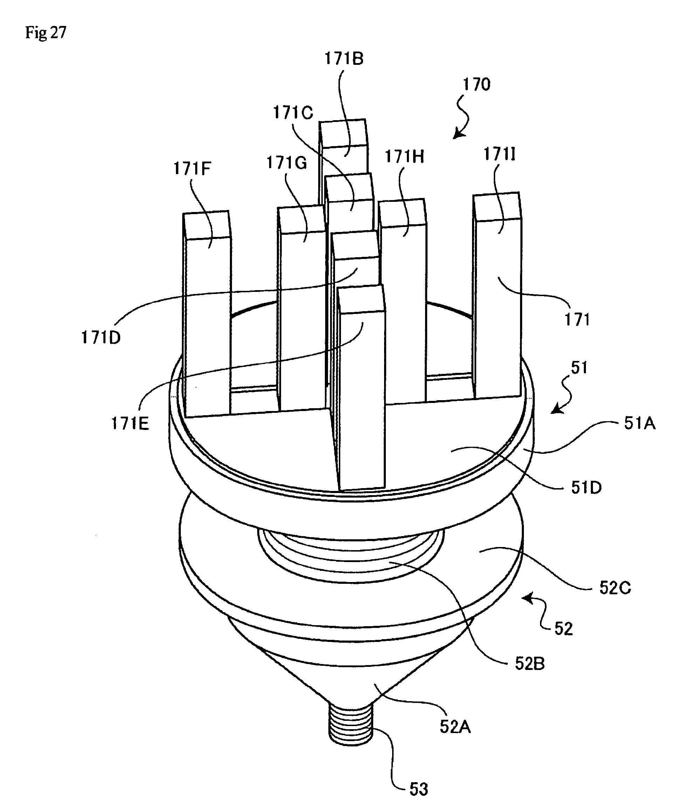

Fig. 27 is a perspective view showing the housing section detaching a protecting section and the light guide section arranged at the illumination device according to the fourth embodiment of the invention.

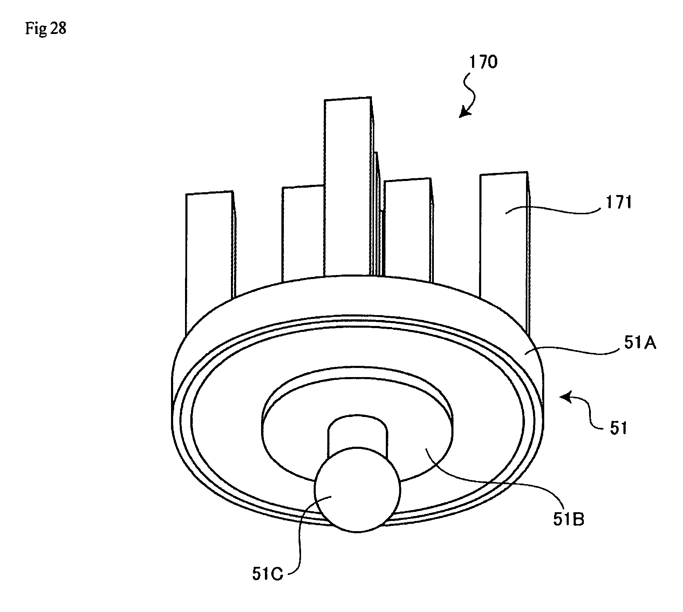

Fig. 28 is a perspective view showing an angle adjusting section of the housing section detaching a protecting section and a light guide section arranged at the illumination device according to the fourth embodiment of the invention.

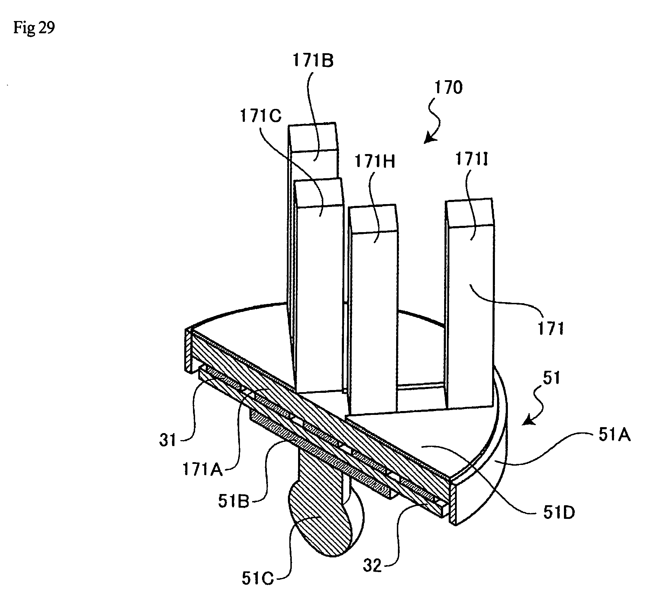

Fig. 29 is an essential cross section showing an angle adjusting section of the housing section detaching a protecting section and a light guide section arranged at the illumination device according to the fourth embodiment of the invention.

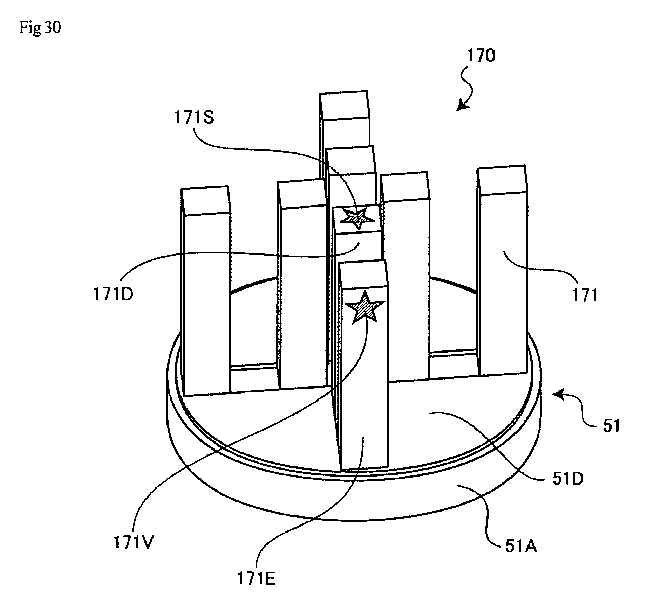

Fig. 30 is a perspective view showing the angle adjusting section of the housing section detaching a protecting section and a display section arranged at the illumination device according to the fourth embodiment of the invention.

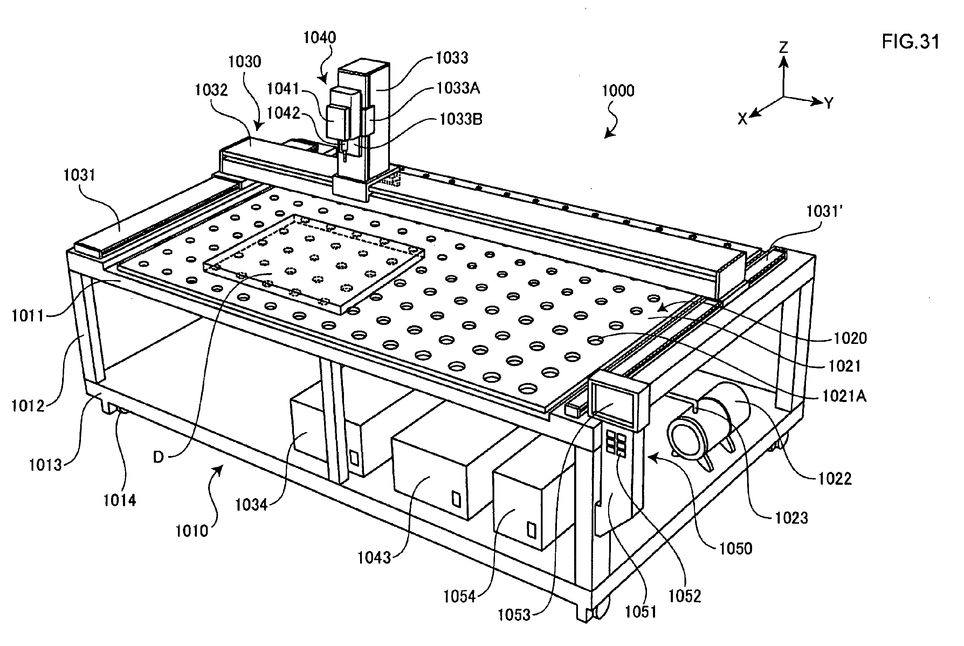

Fig. 31 is a perspective view showing an ultrasound fabrication apparatus for fabricating light guide plates arranged at the respective illumination devices according to the second through the fourth embodiments of the invention.

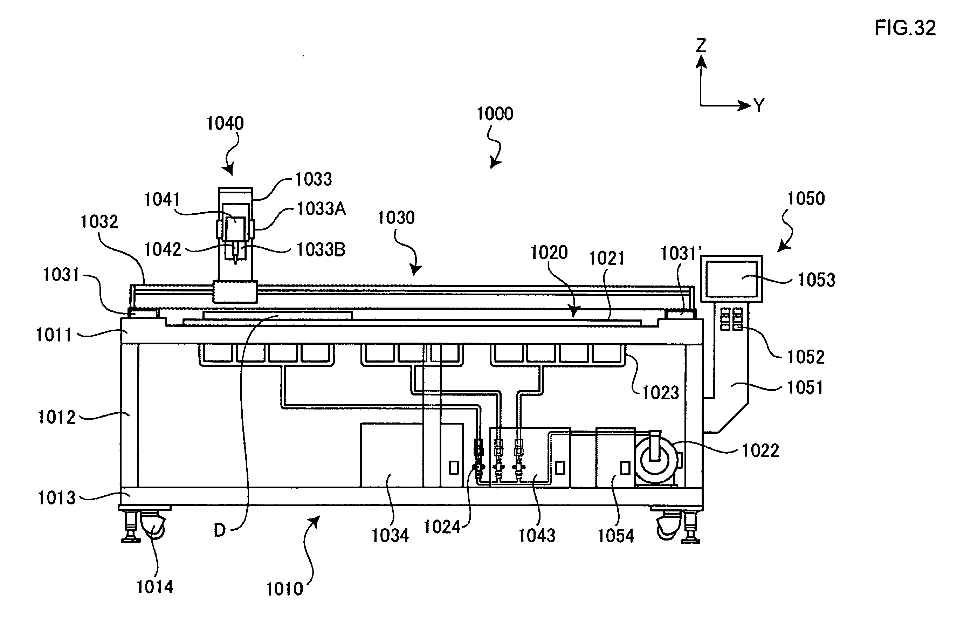

Fig. 32 is a front view showing the ultrasound fabrication apparatus for fabricating light guide plates arranged at the respective illumination devices according to the second through the fourth embodiments of the invention.

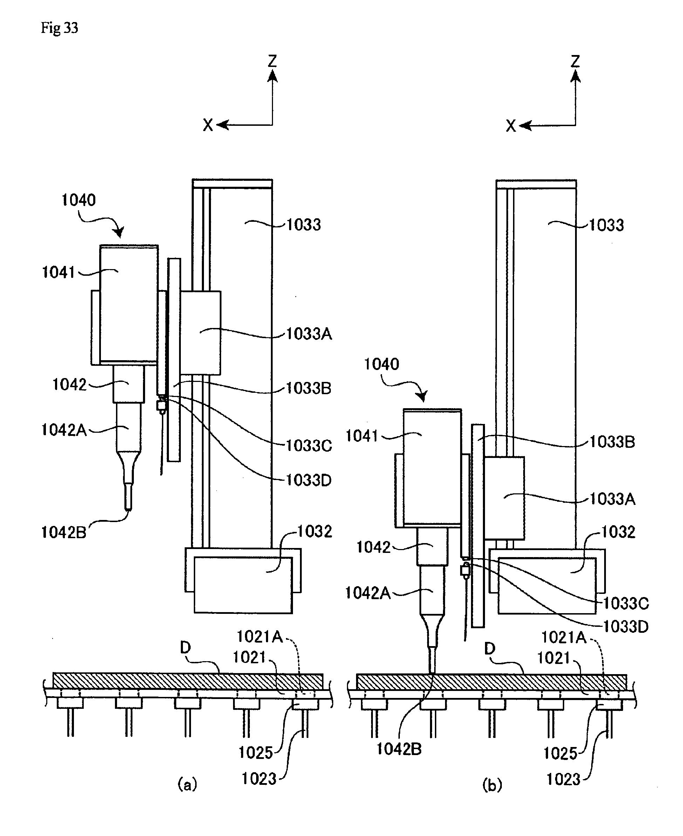

Fig. 33 is a side view showing ultrasound fabrication to a light guide plate material by means of the ultrasound fabrication apparatus for fabricating light guide plates arranged at the respective illumination devices according to the second through the fourth embodiments of the invention;
   (a) is a side view showing a state before the light guide plate material is subject to the ultrasound fabrication; (b) is a side view showing a state that the light guide plate material is under the ultrasound fabrication.

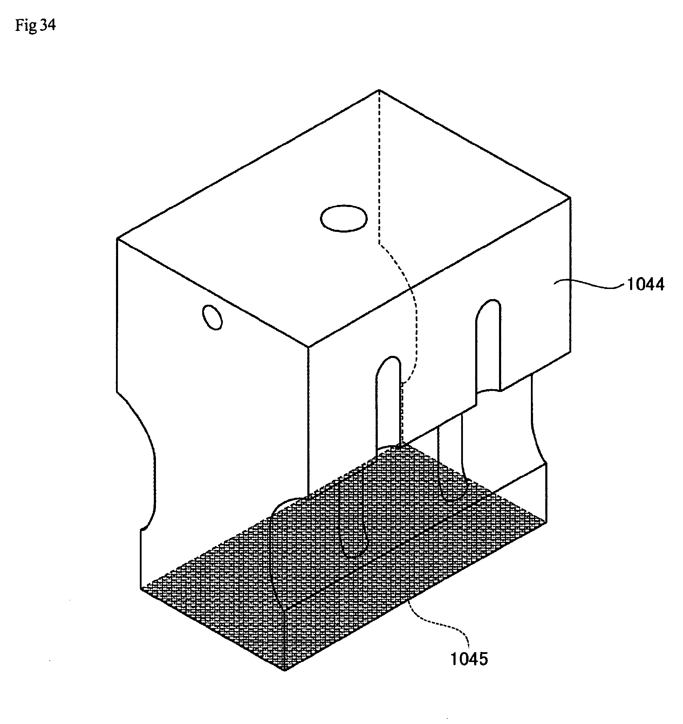

Fig. 34 is a perspective view showing, in a see-through manner, an example of an ultrasound fabrication horn provided at the ultrasound fabrication apparatus for fabricating light guide plates arranged at the respective illumination devices according to the second through the fourth embodiments of the invention.

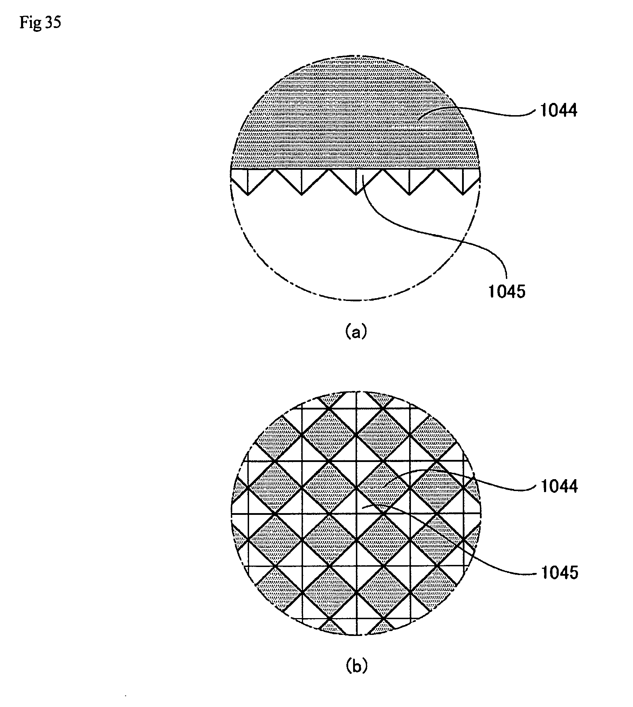

Fig. 35 is a schematic view showing an essential portion of an example of the ultrasound fabrication horn provided at the ultrasound fabrication apparatus for fabricating light guide plates arranged at the respective illumination devices according to the second through the fourth embodiments of the invention; (a) is a schematic side view showing fabrication dots formed in a plural number on the ultrasound fabrication horn; (b) is a schematic front view showing fabrication dots formed in a plural number on the ultrasound fabrication horn.

### Embodiments to Employ the Invention

Hereinafter, referring to the drawings, preferred embodiments regarding illumination devices according to the invention are described. It is to be noted that the illumination device according to the invention are not limited to those described below and are properly modifiable as far as not deviated from the subject matter of the invention.

In the description below, first, referring to Fig. 1 through Fig. 13, an illumination device 1 according to the first embodiment of the invention is described. Next, referring to Fig. 14 through Fig. 24, respective illumination devices according to the second embodiment of the invention are described. Next, referring to Fig. 25, an illumination device 7 according to the third embodiment of the invention is described. Next, referring to Fig. 26 through Fig. 30, an illumination device according to the fourth embodiment of the invention is described. Next, referring to Fig. 31 through Fig. 35, a method for manufacturing light guide plates provided respectively for the illumination devices according to the first through the fourth embodiments of the invention is described. Finally, the structures and essential advantages of the illumination devices according to this invention described above are described on each claim basis.

### [First Embodiment]

Hereinafter, referring to Fig. 1 through Fig. 13, the illumination device 1 according to the first embodiment of the invention is described specifically.

The illumination device 1 in the first embodiment is constituted of an electric power receiving section 10, a power source section 20, a light source section 30, a housing section 40 and a light guide section 100, as shown in, e.g., Fig. 2. Hereinafter, the respective structures of the illumination device 1 are described sequentially.

The electric power receiving section 10 forming the illumination device 1 of the first embodiment is supplied with electric power from an external device. The electric power receiving section 10 thus formed is made of a base 11, an isolation casing 12, and an insulation casing cover 13. The structure of the electric power receiving section 10 is described below. The base 11 of the electric power receiving section 10 receives supply of the electric power upon screwed into a socket installed in, e.g., an inside institution. The base 11 has a diameter of, e.g., 26 mm as an ordinary size. In lieu of the base11, structures such as a plug to be inserted to an electric plug consent for receiving power supply and a terminal coupled to a power generator or a battery for receiving power supply may be used. The insulation casing 12 of the electric power receiving section 10 is made of a plastic resin having an insulation property and may be formed in a cylindrical shape. An electric power source unit 21 is contained in an inner space 12D formed inside the insulation casing 12 thus formed. The insulation casing cover 13 is made of, e.g., a plastic resin having an insulation property and formed from one piece of a cylindrical shape. The insulation casing cover 13 thus formed has a connection portion 13A connected to a connection portion 12C formed at the other end 12B of the insulation casing 12 while the electric power source unit 21 is contained in the inner space 12D of the insulation casing 12. It is to be noted that the insulation casing 12 is connected upon embedding the base 11 on one end 12A, whereas the other end 12B is connected upon embedding a housing 41 of the housing section 40, as described below, while the insulation casing cover 13 is connected.

The power source section 20 forming the illumination device 1 of the first embodiment is connected to the electric power receiving section 10 and converts the electric power supplied externally via the electric power receiving section 10 into a prescribed drive electric power. The power source section 20 thus formed is constituted of the electric power source unit 21 as shown in Fig. 2. The structure of the power source section 20 is described below. The electric power source unit 21 of the power source section 20 performs voltage down from 100 V to, e.g., 24 V in compliance with rating of a light source 31 of the light source section 30, rectification to a constant current of direct current, pulse modification after rectification, and removal of noises, with the electric power inputted from the external device through the base 11 of the electric power receiving section 10. The electric power source unit 21 thus formed is constituted of, such as, e.g., convertor, rectifier, and capacitor. With respect to the structure of the electric power source unit 21, the electric power of alternative current supplied from the external device may be used without converted into the direct current in a case where, e.g., fluorescent tube or lamp, cold cathode fluorescent lamp, or neon tube is used as the light source of the light source section. The electric power source unit 21 is contained in the inner space 12D of the insulation casing 12 of the electric power receiving section 10.

The light source section 30 forming the illumination device 1 of the first embodiment is connected to the power source section 20, and emits light from the drive electric power supplied from the power source section 20. The light source section 30 thus formed is constituted of the light source 30 and a substrate 32 as shown in Fig. 2. The structure of the light source section 30 is described below. Light emitting diode(s) (LED) emitting light in, e.g., white are used for the light source 31 of the light source section 30. More specifically, for LED, used are ones having LED's color temperature of, e.g., around 3000 Kelvin, daylight color or around 5500 Kelvin, cold white color. As shown in Fig. 2, for example, ten LEDs of a surface mount type are arranged in a cross shape along an incident surface 101F and an incident surface 102F of the light guide plate 101 and the light guide plate 102, which are composed in a cross shape. The light source 31 thus formed enters light from the incident surface 101F and the incident surface 102F of the light guide plate 101 and the light guide plate 102 toward a tip 101G and a tip 102G, which are facing each other, to the interior of the light guide plate 101 and the light guide plate 102.

Regarding to the light source section 30, the light source 31 is not limited to the LED for emitting white light, but can be structured of any LED of, e.g., white, red, orange, yellow, green, blue, navy, and violet, or any combination of those. The light source 31 can be formed of LED emitting ultraviolet ray. Similarly, the light source 31 is not limited to the LED, but can be formed of such as, e.g., organic LED, fluorescent tube or lamp, cold cathode fluorescent lamp, and neon tube. The substrate 32 of the light source section 30 is made of, e.g., aluminum having light weight and certain rigidity and made in a disc shape. It is to be noted that as a material for the substrate 32, copper having excellent heat dissipation property or glass epoxy substrate having excellent fabrication property may be used.

The housing section 40 forming the illumination device 1 of the first embodiment contains the light source section 30. The housing section 40 thus formed is constituted of the housing 41, an outer peripheral cover 42, a holding member 43, a securing member 44, and a securing member 45, as shown in Fig. 2. The structure of the housing section 40 is described below. The housing 41 is made of, e.g., aluminum and is made in a hemisphere shape. The securing members 44 made of, e.g., a flat head screw are inserted respectively into holes 41B formed in a surface 41A of the housing 41 thus formed, and screwed and fastened to screw holes 12E formed in the insulation casing 12 and screw holes 13B formed in the insulation casing cover 13. The substrate 32 is engaged with the surface 41A of the housing 41. The drive electric power of the electric power source unit 21 is supplied to the light source 31 via a wiring hole 13C of the insulation casing cover 13, a wiring hole 41C of the housing 41, and a wiring hole 32B of the substrate 32, with a wiring not shown.

Regarding the housing 40, plural fins for heat dissipation made of a curved concave and convex shape can be formed on the outer peripheral surface 41E as shown in Fig. 2 and Fig. 3(a), or plural fins for heat dissipation made of a straight corrugated shape can be formed on the outer peripheral surface 41E' as shown in Fig. 3(b), in order to dissipate, with good efficiency, heat generated at the power source section 20 and the light source section 30 by increasing the surface area of the housing 41. As a matter of course, no fin for heat dissipation may be formed on an outer peripheral surface 41E" as shown in Fig. 3(c) in a case where the drive current amount of the light source 31 is adequately low or where power loss at the electric power source unit 21 is small. The outer peripheral cover 42 is made of, e.g., aluminum and made in a cylindrical shape. The outer peripheral cover 42 thus formed is inserted into the housing 41 from a side of the base 11 and is connected to an end of a side wall 43C of the holding member 43 described below with a connection portion 42A of the outer peripheral cover 42.

Similarly, regarding the housing section 40, the holding member 43 engages the light guide plate 101 and the light guide plate 102 as shown in, e.g., Fig. 2 and is detachably held at the housing 41. The holding member 43 thus formed is made of, e.g., aluminum and is made in a half disc shape. More specifically, the pair of the holding members 43 have a groove portion 43A opened at a center of the holding members 43, respectively, inserted into and engaged with an engagement portion 102H formed at a light guide piece 102A of the light guide plate 102 as described below. The pair of the holding members 43 have a projecting portion 43B formed at each end of the holding members 43, respectively, inserted into and engaged with a recess shaped engagement portion 101H formed respectively below a light guide piece 101A and a light guide piece 101D of the light guide plate 101 as described below. The securing member 45 made of, e.g., a pan head screw is inserted through a hole 43D of the pair of the holding members 43 and through a screw hole 32A opened in the substrate 32 while the light guide plate 102 is inserted in the light guide plate 101 and while the pair of the holding members 43 are engaged respectively. Then, the securing member 45 is screwed and fastened to a screw hole 41D formed at the surface 41A of the housing 41, thereby detachably holding the light guide plate 101, the light guide plate 102, and the substrate 32with respect to the housing 41. The securing member 45 can be sealed with an adhesive containing a reflection agent. The side wall 43C of the pair of the holding member 43 covers an engagement groove 41 F formed on the outer peripheral surface 41E of the housing 41. Alternatively, the substrate 32 may be structured to be detachably held to the surface 41 A of the housing 41 independently in use of a separated securing member made of such as a screw.

The light guide section 100 forming the illumination device 1 of the first embodiment is arranged as to project from the housing section 40, thereby outputting, from the branched outgoing surface, the light of the light source section 30 entered from the incident surface. Regarding the light guide section 100 thus formed, a basic specification of the light guide plate formed at the light guide section 100 is described in referring to Fig. 2. The fundamental optical feature of the light guide plate formed at the light guide section 100 is described next in referring to Fig. 4. Shapes of the branched plural light guide pieces of the light guide plate formed at the light guide section 100 are described next in referring to Fig. 5 to Fig. 12. Finally, applied examples of the light guide plate formed at the light guide section 100 are described in referring to Fig. 13. It is to be noted that the shape of the light guide plate forming the illumination device 1 of the first embodiment is not limited to the shape of the light guide section 100 but can be any shape of light guide sections 110 through 170 structuring the illumination devices of, e.g., the second through fourth embodiments described below.

First, the basic specification of the light guide plate formed at the light guide section 100 is described in referring to Fig. 2. The light guide section 100 is structured in the cross shape in composing, e.g., the light guide plate 101 and the light guide plate 102. The light guide plate 101 and the light guide plate 102 are made of, e.g., a transparent acrylic resin plate, respectively. The light guide plate 101 and the light guide plate 102 are not limited to the transparent resin plate, but can be a colored resin plate. The light guide plate 101 and the light guide plate 102 can be a resin plate added with fine particle diffusing materials generating diffused light upon radiation of, e.g., visible light. Similarly, the light guide plate 101 and the light guide plate 102 can be a resin plate added or coated with fluorescent agent emitting fluorescent light upon radiation of, e.g., ultraviolet or visible light.

Regarding the basic specification of the light guide plate formed at the light guide section 100, the light guide plate 101 and the light guide plate 102 are formed in a prescribed shape. More specifically, the light guide plate 101 has a tip branched into four of a light guide piece 101A, a light guide piece 101B, a light guide piece 101C, and a light guide piece 101D. The light guide plate 101 is formed so that the length of a tip 101G of the light guide piece 101B and the light guide piece 101C is longer than the length of a tip 101G' of the light guide piece 101A and the light guide piece 101D. The light guide plate 101 is formed so that the depth of a cutoff portion 101L formed between the light guide piece 101A and the light guide piece 101B is approximately equal to the depth of a cutoff portion 101N formed between the light guide piece 101C and the light guide piece 101D. The light guide plate 101 is formed so that the depth of a cutoff portion 101 M is deeper than the depths of the cutoff portion 101L and the cutoff portion 101N formed adjacently on right and left sides.

Similarly, regarding the basic specification of the light guide plate formed at the light guide section 100, the light guide plate 102 inserted into and composed with the light guide plate 101 has a tip branched into four of a light guide piece 102A, a light guide piece 102B, a light guide piece 102C, and a light guide piece 102D, in substantially the same way as the light guide plate 101. The light guide plate 102 is formed so that the length of a tip 102G of the light guide piece 102B and the light guide piece 102C is longer than the length of a tip 102G' of the light guide piece 102A and the light guide piece 102D, in substantially the same way as the light guide plate 101. The light guide plate 102 is formed so that the depth of a cutoff portion 102L formed between the light guide piece 102A and the light guide piece 102B is approximately equal to the depth of a cutoff portion 102N formed between the light guide piece 102C and the light guide piece 102D, in substantially the same way as the light guide plate 101. The light guide plate 102 is formed so that the depth of a cutoff portion 102M is deeper than the depths of the cutoff portion 102L and the cutoff portion 102N formed adjacently on right and left sides, in substantially the same way as the light guide plate 101.

Similarly, regarding the basic specification of the light guide plate formed at the light guide section 100, the light guide plate 102 is inserted into the light guide plate 101 so that the cutoff portion 101 M of the light guide plate 101 is jointed with a joint portion 102J formed at a center of an incident surface 102F of the light guide plate 102. It is to be noted that where the cutoff portion 101M is jointed with the joint portion 102J, the light guide plate 101 and the light guide plate 102 are formed so that an incident surface101F of the light guide plate 101 and an incident surface 102F of the light guide plate 102 are positioned at the same plane. The light guide plate 101 and the light guide plate 102 may be coated with a silicone coating agent or glass coating agent, not shown, having functions of such as waterproof, dirty-proof, and dustproof or may be covered with a transparent resin, not shown, having functions of such as waterproof, dirty-proof, and dustproof.

Next, the fundamental optical feature of the light guide plate formed at the light guide section 100 is described in referring to Fig. 4. In Fig. 4, a light guide plate 103 simplifying structures of the light guide plate 101 and the light guide plate 102, and a light source 31 adjacent to the light guide plate 103 are shown schematically. A part of light of the light source 31 entered from an incident surface 103F of the light guide plate 103 can be reflected at a wide angle by three cutoff portions 103L through 103N formed among light guide piece 103A through light guide piece 103D, which are branched into, e.g., four pieces. A part of light reflected at the wide angle at the cutoff portions 103L through 103N is reflected in a multiple number between a major surface 103V and the other major surface 103Q formed at each of the light guide piece 103A through the light guide piece 103D. In a case where the depth of the cutoff portion 103M of the light guide plate 103 is made deeper than the depths of the cutoff portion 103L and the cutoff portion 103N formed adjacently on the right and left sides, the light reflected at a wide angle at the cutoff portion 103M can easily reach the light guide piece 103A and the light guide piece 103D.

Regarding the fundamental optical feature of the light guide plate formed at the light guide section 100, in a case of a light guide plate formed in a simple rectangular shape likewise as a prior art light guide plate, most part of light proceeding straight entered from the incident surface of the light guide plate are outputted from a tip upon proceeding straight. In a case of the light guide plate made of, e.g., a four-way branched shape as the light guide plate 103 according to this invention, however, light entered from the incident surface 103F of the light guide plate 103 is reflected in a multiple number between the major surface 103V and the other major surface 103Q formed at each of the light guide piece 103A through the light guide piece 103D, via the cutoff portion 103L through the cutoff portion 103N. The light entered into the light guide plate 103 is reflected to a side of the incident surface 103F without being outputted from the tip 103G or the tip 103G' after entering to, e.g., the tip 103G or the tip 103G' in a slant entry angle upon reflecting omni-directionally among respective surfaces of the light guide plate 103. Therefore, with the light guide plate 103 according to this invention, a ratio of the light entered from the incident surface 103F of the light guide plate 103 but outputted from the tip 103G or the tip 103G' upon proceeding straight, can be reduced largely.

The shapes of the branched plural light guide pieces of the light guide plate formed at the light guide section 100 are described in referring to Fig. 5 to Fig. 12. A light guide plate 104A shown in Fig. 5 is formed with a curving surface extending to an outside of a tip of a plurally branched light guide piece 104A', and a light guide plate 104B shown in Fig. 6 is formed with a curving surface extending to an inside of a tip of a plurally branched light guide piece 104B'. A light guide plate 104C shown in Fig. 7 is formed with an inclined surface extending to an inside of a tip of a plurally branched light guide piece 104C'. It is to be noted that the light guide piece 104C' of light guide plate 104C shown in Fig. 7 may be formed with an inclined surface extending to an outside of a tip of the light guide piece 104C'. A light guide plate 104D shown in Fig. 8 is formed with a recess shaped tip of a plurally branched light guide piece 104D'. More specifically, the tip of the light guide piece 104D' of the light guide plate 104D has an inclined surface in a manner that a recess is formed from both ends toward the center. The respective light guide pieces of the light guide plate 104A through the light guide plate 104D thus formed are excellent in design feature and capable of suppressing light intensity profile deviation according to visually recognizing angle by fabricating the tip portions into a special shape. The respective light guide pieces of the light guide plate 104A through the light guide plate 104D render light easy to be reflected in a multiple number at the respective major surfaces by random refection of the light at the tip portions. Accordingly, a ratio of light outputted from the tip portions of the respective light guide pieces of the light guide plate 104A through the light guide plate 104D to the exterior is reduced, thereby improving light taking-out efficiency from the respective major surfaces. It is to be noted that the light outputted from the tip portions of the respective light guide pieces of the light guide plate 104A through the light guide plate 104D to the exterior is outputted in a direction of outbound, inbound, or inbound and inclined with respect to the illumination device 1.

Regarding to the shapes of the branched plural light guide pieces of the light guide plate formed at the light guide section 100, a light guide plate 104E shown in Fig. 9 is formed with a recess portion made of a cylindrical shape having a prescribe depth, respectively, at a tip of plurally branched light guide pieces 104E', and a light guide plate 104F shown in Fig. 10 is formed with a recess portion made of a cone shape having a prescribe depth, respectively, at a tip of plurally branched light guide pieces 104F'. The light guide plate 104E and the light guide plate 104F thus formed are, in substantially the same way as the light guide plate 104A and the light guide plate 104D, are excellent in design feature and capable of suppressing light intensity profile deviation according to visually recognizing angle by fabricating the tip portions into a special shape. The light guide plate 104E and the light guide plate 104F can render light reflected in a diffused manner at an inner peripheral surface of the recess portion, where the recess portion is made to have a rough surface accuracy at the recess portion using, e.g., a drilling machine at a time to form the recess portion made of the cylindrical shape or the cone shape at the tip of the plurally branched light guide pieces of the light guide plates. Therefore, the illumination device can improve the light taking-out efficiency at the light guide plate 104E and the light guide plate 104F.

Regarding to the shapes of the plurally branched light guide pieces of the light guide plate formed at the light guide section 100, a light guide plate 104G shown in Fig. 11 has the plurally branched light guide pieces 104G' whose top is in a frustum of a pyramid shape e, and a light guide plate 104H shown in Fig. 12has the plurally branched light guide pieces 104H' whose top is in a circular truncated cone shape. The light guide plate 104G and the light guide plate 104H thus formed are excellent in design feature and capable of suppressing light intensity profile deviation according to visually recognizing angle by fabricating the tip portion of the respective light guide pieces into a special shape. The light guide plate 104G and the light guide plate 104H are subject to an endmill fabrication using a milling machine to form projection portions made in the frustum of the pyramid shape or circular truncated cone shape at the tip of the plurally branched light guide pieces of the light guide plate. By forming the projection portions made in the frustum of the pyramid shape or circular truncated cone shape at the tip portions of the light guide pieces of the light guide plate 104G and the light guide plate 104H, perpendicular corners are removed, thereby making easier multiple reflections of the light inside the light guide plates. Accordingly, the illumination device can improve the light taking-out efficiency at the light guide plate 104G and the light guide plate 104H. The light outgoing to the exterior from the tip portions becomes substantially parallel light because the tip portions of the respective light guide pieces of the light guide plate 104G and the light guide plate 104H are formed in substantially a lens shape made in the frustum of the pyramid shape or circular truncated cone shape.

It is to be noted that, regarding to the shapes of the plurally branched light guide pieces of the light guide plate formed at the light guide section 100, a light guide plate formed at the light guide section 100 described above in referring to Fig. 5 through Fig. 12, may be formed to be twisted from the incident surface to the tip, respectively. The plurally branched light guide pieces of the light guide plate are not limited to pieces having a rectangular cross section, but may have a cross section of a disc shape, an oval shape, or polygon shape. Similarly, the plurally branched light guide pieces of the light guide plate may be formed in a cone or pyramid shape having a cross-sectional area smaller as approaching to the tip from the incident surface of the light guide plate. It can be structured that the light radiated to the side surface and the tip from the inside of the light guide plate may be diffused and reflected at the side surface and the tip by rendering the surface accuracy or smoothness rough at a part or all of the side surface and the tip of the light guide plate. The shapes of the plurally branched light guide pieces of the light guide plate formed at the light guide section 100 described above in referring to Fig. 5 through Fig. 12 are applicable to the respective illumination devices in the second through the fourth embodiments.

Finally, applied examples of the light guide plate formed at the light guide section 100 are described in referring to Fig. 13. Fig. 13(a) shows three light guide plates 105 composed into a triangle prism having a space inside by coupling an end of the light guide plate 105 with an end of the adjacent light guide plate 105. Similarly, Fig. 13(b) shows a light guide plate 105' molded in a united body from, e.g., a molding process so as to be a triangle prism shape having a space inside. The light guide plate is not limited to a triangle prism shape having a space inside as shown in Fig. 13(a) and Fig. 13(b), but can have a shape of a polygonal prism such as a rectangular or pentagon prism having a space inside. Fig. 13(c) shows three light guide plates 106 composed into a cylindrical shape by coupling an end of the curving light guide plate 106 with an end of the adjacent curving light guide plate 106. Similarly, Fig. 13(d) shows a light guide plate 165' molded in a united body from, e.g., a molding process so as to be a cylindrical shape. The light guide plate is not limited to the cylindrical shape having circle cross section as shown in Fig. 13(c) and Fig. 13(d), but can have a cylindrical shape having an oval cross section.

Regarding the applied examples of the light guide plate formed at the light guide section 100, Fig. 13(e) shows four light guide plates 107 arranged in a cross shape in composing the light guide plates 107. Similarly, Fig. 13(f) shows a light guide plate 107' molded in a united body from, e.g., a molding process so as to be a cross shape. The light guide plate is not limited to a cross shape projecting four light guide pieces as shown in Fig. 13(e) and Fig. 13(f), but can be a shape projecting plural, such as three or five, light guide pieces. The light guide plate, though not shown in respective Figs. 13, can be molded in a unit body by a molding process as to form a cross section in such as a polygon shape, circular shape, or oval shape without forming any space inside. The applied examples of the light guide plate formed at the light guide section 100 described above in referring to Fig. 13 are applicable to the respective illumination devices in the second through the fourth embodiments described below.

As described above, according to the illumination device 1 of the first embodiment, the outer shape of the light guide plate arranged at the light guide section can be decided in compliance with environments of an institution or user's favorite. That is, with the illumination device 1 according to the first embodiment, light guide sections of such as, e.g., a spot type or a light bulb type having different light distribution characteristics and different design feature can be provided. More specifically, with the illumination device 1 according to the first embodiment, the surface area of the side surface rendering the light reflected in a multiple number in the interior of the light guide plate is increased by branching plurally the outgoing surface of the tip of the light guide plate formed at the light guide section. Accordingly, where the illumination device 1 according to the first embodiment thus formed is used, the light ratio directly outgoing to the exterior from the outgoing surface of the tip of the light guide plate is reduced, and the ratio of the light outgoing from the side surface of the light guide plate is increased, so that the illumination device can illuminate brightly its surroundings. That is, the illumination device 1 can widen the light directionality outgoing from the illumination device 1. The light outgoing from the light guide plate further can suppress dazzling feeling on a viewer when entered in the eye of the viewer.

With the illumination device 1 of the first embodiment, the shape of the tip portion of the light guide plate formed at the light guide section is made of, e.g., a curving surface curving inward or outward, a frustum of a pyramid shape or circular truncated cone shape, or a shape formed with recesses formed in a cylindrical or cone shape having a prescribed depth. Accordingly, with use of the illumination device 1 according to the first embodiment thus formed, the outgoing direction of the light outputted from the tip of the light guide plate can be controlled to be a prescribed angle; the light can be easily reflected in a multiple number within the light guide plate because a part of the light randomly reflected at the tip of the light guide plate is reflected toward the incident surface; the light outgoing from the tip of the light guide plate can be made as substantially convergence light or divergence light. That is, with use of the illumination device 1 according to the first embodiment thus formed, the light intensity profile of the light outgoing from the light guide section of the illumination device 1 can be set arbitrarily, and light having a light intensity profile approximately equal from a direction perpendicular to the illumination device 1 to a horizontal direction can be outputted. It is to be noted that if the light guide plate is arranged as to project in widening itself in the horizontal direction as remoter from the housing section, the light can be outputted backward in addition of forward of the illumination device 1.

Similarly, with the illumination device 1 according to the first embodiment, the outer shape of the light guide plate formed at the light guide section is made in a cross shape by three-dimensionally intersecting and composing, e.g., two light guide plates. In use of the illumination device 1 according to the first embodiment thus formed, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the illumination device 1. Because the two light guide plates forming, e.g., the cross shape at the light guide section are overlapped, a part of the light reflected in a multiple number inside one of the light guide plates is outputted upon further multiple reflection inside the other light guide plate after entered into the other light guide plate overlapped adjacently with the one light guide plate. That is, the light of the light source entered from the incident surface of the light guide plate is diffused as diffused light. Accordingly, the light can be recognized as the good light source having few differences between brightness and darkness without making the viewer dazzling feeling.

Similarly, with the illumination device 1 according to the first embodiment, it has excellent design feature by rendering the light guide plates arranged at the light guide section formed into various shapes. Therefore, if used, the illumination device 1 according to the first embodiment thus formed is useful not only as a conventional illumination device obtaining a certain illumination degree by radiating indoors, but also obtainable of prescribed staging effects for viewers who visually recognize the illumination device 1 at, e.g., restaurants or marriage ceremonies.

### [Second Embodiment]

Hereinafter, respective illumination devices according to the second embodiment of the invention are described in detail in referring to Fig. 14 through Fig. 24.

The respective illumination devices according to the second embodiment of the invention have a feature that the light guide plate 101 and the light guide plate 102 of the light guide section 100 structuring the illumination device 1 of the first embodiment have recess or projecting patterns, respectively. The structures of the second embodiment other than those are substantially the same as the structures described in the first embodiment. An illumination device 2 of the second embodiment is structured, as shown in Fig. 14 and Fig. 15, of the electric power receiving section 10, the power source section 20, the light source section 30, and the housing section 40, which have substantially the same specifications as those of the illumination device 1 of the first embodiment, and the light guide section 110 particular for illumination device 2 of the second embodiment In the second embodiment, the light guide section, having a different structure from the first embodiment, is described mainly.

The light guide section 110 forming the illumination device 2 of the second embodiment is formed with recess or projecting patterns for outputting the light of the light source section 30 entered from the incident surface as diffused light. The recess or projecting patterns are formed at least one surface of the plural outgoing surfaces of the light guide plates of the light guide section 110. Regarding the light guide section 110 thus formed, a basic specification of the light guide plate formed at the light guide section 110 is described in referring to Fig. 15. The fundamental optical feature of the light guide plate formed at the light guide section 110 is described next in referring to Fig. 16 through Fig. 18. The optical feature of the light guide plate where the light is entered through plural incident surfaces to the light guide plate formed at the light guide section 110 is described in referring to Fig. 19. Details of the recess patterns formed on the light guide plate formed at the light guide section 110 are described in referring to Fig. 20. Finally, applied examples of the outer shapes of the light guide section 110 are described in referring to Fig. 21 through Fig. 24.

First, for a basic specification of the light guide plate formed at the light guide section 110, a different specification from the light guide section 100 described above only is described in referring to Fig. 15. Patterns 111P made of recess patterns, projecting patterns, or recess and projecting patterns for outputting diffused light are formed in a matrix shape at the light guide plate 111 of the light guide section 110. Similarly, patterns 112P made of recess patterns, projecting patterns, or recess and projecting patterns for outputting diffused light are formed in a matrix shape at the light guide plate 112 of the light guide section 110. The pitches of the patterns 111P and the patterns 112P thus formed are, for example, 1 mm through 6 mm, respectively.

The fundamental optical feature of the light guide plate formed at the light guide section 110 is described next in referring to Fig. 16 through Fig. 18. In the respective drawing of Fig. 16 through Fig. 18, patterns are omitted from the illustration of major surfaces of the light guide plate. In Fig. 16, schematically shown as a cross section are a light guide plate 113 simplifying the structures of the light guide plate 111 and the light guide plate 112, and a light source 31 adjacent to the light guide plate 113. A part of the light of the light source 31 entered from an incident surface 113F of the light guide plate 113 can be reflected at a wide angle by three cutoff portion 113L through cutoff portion 113N formed among, e.g., four way branched light guide piece 113A through light guide piece 113D. A part of the light reflected at the wide angle at the cutoff portion 113L through the cutoff portion 113N can produce with good efficiency diffused light at patterns 113W formed plurally on the one major surface 113V and pattern 113R formed plurally on the other major surface 113Q because reflected in a multiple number between the one major surface 113V and the other major surface 113Q formed on the light guide piece 113A through the light guide piece 113D. Where the depth of the cutoff portion 113M of the light guide plate 113 is formed deeper than the depths of the cutoff portion 113L and the cutoff portion 113N formed adjacently on right and left sides, the light reflected with a wide angle at the cutoff portion 113M easily reaches the light guide piece 113A and the light guide piece 113D.

Regarding the fundamental optical feature of the light guide plate formed at the light guide section 110, a part of the light of the light source 31 entered from the incident surface 113F of the light guide plate 113 generates diffused light by the patterns 113W and the patterns 113R formed respectively at the light guide piece 113A and the light guide piece 113D without passing through the cutoff portion 113L, the cutoff portion 113M, and the cutoff portion 113N. In a case of a light guide plate formed in a simple rectangular shape likewise a conventional light guide plate, most of the light proceeding straight entered from the incident surface of the light guide plate is outputted from the tip upon proceeding straight without converted to diffused light. The light entered from the incident surface 113F of the light guide plate 113, however, are reflected in a multiple number between the one major surface 113V and the other major surface 113Q formed respectively on the light guide piece 113A through the light guide piece 113D via the cutoff portion 113L through the cutoff portion 113N, where the light guide plate is in a form of the four way branched shape like the light guide plate 113 of the invention. The light entered into the light guide plate 113 is reflected to a side of the incident surface 113F without outgoing from the tip 113G after proceeding in a slant entry at, e.g., the tip 113G upon reflected omni-directionally among the respective surfaces of the light guide plate 113. Accordingly, with the light guide plate 113 according to the invention, a ratio that the light entered from the incident surface 113F of the light guide plate 113 is outputted from the tip 113G upon proceeding straight without converted to diffused light can be reduced largely.

Similarly, regarding the fundamental optical feature of the light guide plate formed at the light guide section 110, if the density of the patterns 113W and the patterns 113R formed at the light guide plate 113 is adequately high, the plural diffused lights generated at the patterns 113W and the patterns 113R are outputted, as of approximately uniform area light source, from the major surface 113V and the other major surface of the light guide plate 113. A part of the diffused light generated at the patterns 113W on the one major surface 113V and most of the diffused light generated at the patterns 113R on the other major surface 113Q are recognized visually with eyes E of the viewer. The light guide plate 114 in which patterns 114W formed plurally on the one major surface 114V and the patterns 114R formed plurally on the other major surface 114Q are formed in a half pitch shifted manner as shown in Fig. 17(b), rather than the light guide plate 113 in which patterns 113W formed plurally on the one major surface 113V and the patterns 113R formed plurally on the other major surface 113Q are formed at the same position between the major surfaces, or double sides, as shown in Fig. 16(b), has more number of the patterns generating the diffused light visible by the eyes E of the viewer, so that the difference between brightness and darkness of the light becomes smaller for the light guide plate 114. Because the light intensity of the light source 31 is lowered correlatively from the incident surface of the light guide plate to the tip, the intensity of the diffused light generated at the plural patterns can be averaged upon increasing the intensity of the generated diffused light by forming the depths of the patterns to be deeper in a stepwise manner from the incident surface 115F of the light guide plate 115 toward the tip 115G. Similarly, the device can be structured to make the intensity of the diffused light averaged by forming the pitch of the patterns to be denser in a stepwise manner from the incident surface 115F of the light guide plate 115 toward the tip 115G.

The optical feature of the light guide plate where the light is entered through plural incident surfaces to the light guide plate formed at the light guide section 110 is described in referring to Fig. 19. The light guide plate 116 shown in Fig. 19 is equivalent to, e.g., a state that the light source 31 is provided even between the light guide piece 112B and the light guide piece 112C of the light guide plate 112 where the light source 31 is provided at the incident surface of the light guide plate 112 shown in Fig. 15. As shown in Fig. 19, the patterns 116A formed on the one major surface and the patterns 116B formed on the other major surfaces of the light guide plate 116C through the light guide plate 116F are formed in a matrix shape with a pitch P1. With the light guide plate 116C through the light guide plate 116F shown in respective drawings of Fig. 19(a) through 19(d), incident light L1 is emitted from a horizontal direction X in Fig. 19 to the respective patterns of the light guide plate 116. Similarly, incident light L2 is emitted from a vertical direction Y in Fig. 19 to the respective patterns of the light guide plate 116C through the light guide plate 116F. Hereinafter, the optical characteristics under three conditions in which the patterns 116B are shifted in a prescribed direction with respect to the patterns 116A in a manner of the light guide plate 116D through the light guide plate 116F shown in Fig. 19(b) through Fig. 19(d), are described respectively with a state that the patterns 116A and the patterns 116B are formed at the same position between the major surfaces, or double sides in a manner of the light guide plate 116C shown in Fig. 19(a) as a reference.

Regarding the optical characteristics when the light is entered from plural incident surfaces at the light guide plate, the patterns formed in the X direction of the light guide plate 116 visually recognizable from the one major surface side of the light guide plate 116D are two times in comparison with the patterns of the light guide plate 116C shown in Fig. 19(a) where the patterns 116B are formed at a shifted portion by a half pitch P2 in the X direction with respect to the patterns 116A in a manner of the light guide plate 116D as shown in Fig. 19(b). Therefore, the light guide plate 116D shown in Fig. 19(b) has smaller differences between brightness and darkness of the light in the X direction of the light guide plate 116D in comparison with the light guide plate 116C shown in Fig. 19(a) because the bright points according to the patterns visible from the one major surface of the light guide plate 116D become twice in the X direction of the light guide plate 116D. The patterns formed in the Y direction of the light guide plate 116E visually recognizable from the one major surface side of the light guide plate 116E are two times in comparison with the patterns of the light guide plate 116C shown in Fig. 19(a) where the patterns 116B are formed at a shifted portion by a half pitch P2 in the Y direction with respect to the patterns 116A in a manner of the light guide plate 116E as shown in Fig. 19(c). Therefore, the light guide plate 116E shown in Fig. 19(c) has smaller differences between brightness and darkness of the light in the Y direction of the light guide plate 116E in comparison with the light guide plate 116C shown in Fig. 19(a) because the bright points according to the patterns visible from the one major surface of the light guide plate 116E become twice in the Y direction of the light guide plate 116E.

Regarding the optical characteristics when the light is entered from plural incident surfaces at the light guide plate, the patterns formed respectively in the X direction and the Y direction of the light guide plate 116F visually recognizable from the one major surface side of the light guide plate 116F are two times, respectively, in comparison with the patterns of the light guide plate 116C shown in Fig. 19(a) where the patterns 116B are formed at a shifted portion by the half pitch P2 in the X direction and the Y direction, respectively, with respect to the patterns 116A in a manner of the light guide plate 116F as shown in Fig. 19(d). Therefore, the light guide plate 116F shown in Fig. 19(d) has much smaller differences between brightness and darkness of the light in the X direction and the Y direction of the light guide plate 116F in comparison with the light guide plate 116C shown in Fig. 19(a) because the bright points according to the patterns visible from the one major surface of the light guide plate 116F become twice, respectively, in the X direction and the Y direction of the light guide plate 116F. As described above in referring to the light guide plate 116C and the light guide plate 116F as shown in Fig. 19(a) through Fig. 19(d), the optical characteristics of the light guide plate 116 can be set arbitrarily by forming the patterns 116B in the position shafted in the X, Y directions with respect to the patterns 116A of the light guide plate 116. Particularly, with the light guide plate 116F shown in Fig. 19(d), differences between brightness and darkness of the light become small in each of the X and Y directions in comparison with the light guide plate 116C shown in Fig. 19(a), so that the light guide plate 116F can obtain good optical characteristics.

Referring to Fig. 20, details of the recess patterns formed on the light guide plate formed at light guide sec 110 are described. Fig. 20 shows recess patterns 117A made of pyramids formed on the light guide plate 117. The light guide plate 117 can output with good efficiency diffused light from the one major surface 117C and the other major surface 117D because the recess patterns 117A made of the pyramid has a surface rectangular at a bottommost portion 117A'. More specifically, a part of the light entered from the incident surface 117F is radiated to, e.g., the bottommost portion 117A' of the patterns 117A formed on a side of the one major surface 117C, and is reflected in a direction becoming remoter from the incident surface 117F as well as toward the other major surface 117D. Similarly, a part of the light entered from the incident surface 117F is radiated to, e.g., the bottommost portion 117A' of the patterns 117A formed on a side of the other major surface 117D, and is reflected in a direction becoming remoter from the incident surface 117F as well as toward the one major surface 117C. Accordingly, the light entered from the incident surface 117F are converted with good efficiency into diffused light and can be outputted from the one major surface 117C and the other major surface 117D.

Regarding details of the recess patterns formed at the light guide plate, diffused light can be directly outputted with good efficiency from the one major surface 117C and the other major surface 117D by forming the recess patterns 117A made of pyramids to have a rectangular surface at the bottommost portion 117A'. More specifically, if the recess patterns 117A are in a pure pyramid shape, the diffused light generated near the bottommost portion 117A' of the pyramid is little outputted from the one major surface 117C and the other major surface 117D because the diffused light is largely attenuated from multiple reflections near the bottommost portion 117A' due to that a distance from one surface 117M to the opposite other surface 117N facing one another at the tip portion of the pyramid is very short. To the contrary, where the recess patterns 117A have a surface in a rectangular shape at the bottommost portion 117A' of the pyramid, the diffused light generated near the bottommost portion 117A' of the pyramid are directly outputted from the one major surface 117C and the other major surface 117D before multiple reflections because there is a certain distance from the one surface 117M to the opposite other surface 117N facing one another near the bottommost portion 117A'. Accordingly, the light entered from the incident surface 117F can be outputted with good efficiency from the major surfaces.

Finally, applied examples of the outer shapes of the light guide plate 110 are described in referring to Fig. 21 through Fig. 24. A light guide plate 120 of an illumination device 3 shown in Fig. 21 is formed with a light guide plate 121 and a light guide plate 122 composed and formed so that light guide pieces plurally branched have the same lengths, and the lengths of the light guide pieces plurally branched are formed all the same. The specification of the light guide plate 120 of the illumination device 3 other than the above description is the same as that of the light guide plate 110 described above. A light guide plate 130 of an illumination device 4 shown in Fig. 22 is formed by composing a light guide plate 131 and a light guide plate 132 formed to render light guide pieces branched into four ways in a cross shape to be a trapezoid shape respectively. The light guide plate 131 has a tip 131G branched into two ways of a light guide plate 131A and a light guide plate 131B. The light guide plate 131 is formed into a trapezoid shape by rendering the tip 131 G of the light guide plate 131 A and the light guide plate 131B inclined as to be more lowered from the periphery to the center of the illumination device 4. The light guide plate 132 inserted and composed with the light guide plate 131 has the same shape as the light guide plate 131.

Regarding the applied examples of the outer shapes of the light guide plate 110, a light guide plate 140 of an illumination device 5 shown in Fig. 23 is formed in composing a light guide plate 141 and a light guide plate 142 formed so that four tips formed in a cross shape are in an arc shape, respectively. The light guide plate 141 has a tip 141G branched into two ways of a light guide plate 141 A and a light guide plate 141 B. The light guide plate 141 is formed into the arc shape, respectively, by rendering the tip 141 G of the light guide plate 141 A and the light guide plate 141 B curving as to be higher from the periphery to the center of the illumination device 5. The light guide plate 142 inserted and composed with the light guide plate 141 is formed in a half disc shape by rendering the tip 142G curving from the periphery to the center of the illumination device 5. A light guide plate 150 of an illumination device 6 shown in Fig. 24 has the same outer shape as the light guide plate 120 of the illumination device 3 shown in Fig. 21 described above. To the contrary, a light guide plate 151 and a light guide plate 152 of the light guide plate 150 are formed with recess patterns, projecting patterns, or recess and projecting patterns even at the tip 151 G and the tip 152G, or at a side surface 151U and a side surface 152U. The outer shapes of the light guide plate 120 through the light guide plate 140 described in referring to Fig. 21 through Fig. 23 are applicable to the illumination device 1 of the first embodiment described above.

Regarding the applied examples of the outer shapes of the light guide plate 110, Table 1 shows an example of measured results of luminance (1x) at total four locations of a position one meter away in a vertical direction from a tip of the respective light guide sections, and positions 30cm, 50cm, and 100cm away in a horizontal direction from the position one meter away, about the light guide plate 11o through the light guide plate 140. It is to be noted that the conditions of the light source are the same at each light guide plate.

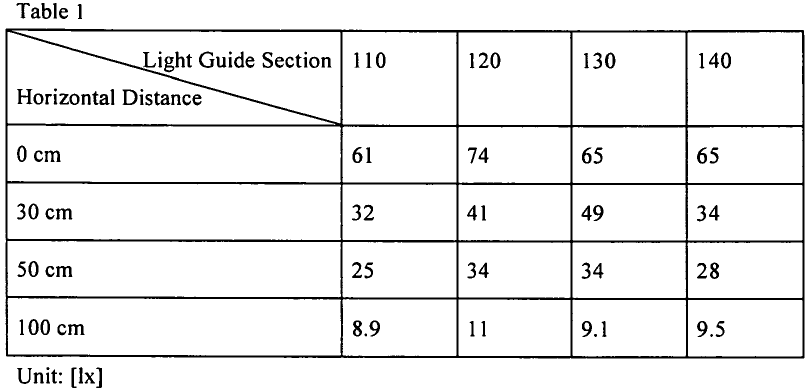

As described above, according to the respective illumination devices according to the second embodiment, in the same way as the illumination device 1 of the first embodiment, the outer shape of the light guide plate can be determined in compliance with environments of an institution or user's favorite. That is, with the respective illumination devices according to the second embodiment, light guide sections of such as, e.g., a spot type or a light bulb type having different light distribution characteristics and different design feature can be provided. More specifically, with the respective illumination devices according to the second embodiment, in substantially the same way as the illumination device 1 in the first embodiment, the surface area of the side surface rendering the light reflected in a multiple number in the interior of the light guide plate is increased by branching plurally the outgoing surface of the tip of the light guide plate formed at the light guide section. Accordingly, where the respective illumination devices according to the second embodiment thus formed is used, the light ratio directly outgoing to the exterior from the outgoing surface of the tip of the light guide plate is reduced, and the ratio of the light outgoing from the side surface of the light guide plate is increased, so that the illumination device can illuminate brightly its surroundings. That is, the respective illumination devices can widen the light directionality outgoing from the illumination devices. The light outgoing from the light guide plate further can suppress dazzling feeling on a viewer when entered in the eye of the viewer.

With the respective illumination devices of the second embodiment, in substantially the same way as in the first embodiment, the shape of the tip portion of the light guide plate formed at the light guide section is made of, e.g., a curving surface curving inward or outward, a frustum of a pyramid shape or circular truncated cone shape, or a shape formed with recesses formed in a cylindrical or cone shape having a prescribed depth. Accordingly, with use of the respective illumination devices of the second embodiment thus formed, the outgoing direction of the light outputted from the tip of the light guide plate can be controlled to be a prescribed angle; the light can be easily reflected in a multiple number within the light guide plate because a part of the light randomly reflected at the tip of the light guide plate is reflected toward the incident surface; the light outgoing from the tip of the light guide plate can be made as substantially convergence light or divergence light. That is, with use of the respective illumination devices of the second embodiment thus formed, the light intensity profile of the light outgoing from the light guide section of the illumination devices can be set arbitrarily, and light having a light intensity profile approximately equal from a direction perpendicular to the illumination devices to a horizontal direction can be outputted. It is to be noted that if the light guide plate is arranged as to project in widening itself in the horizontal direction as remoter from the housing section, the light can be outputted backward in addition of forward of the illumination devices.

Similarly, with the respective illumination devices according to the second embodiment, the outer shape of the light guide plate formed at the light guide section is made in a cross shape by three-dimensionally intersecting and composing, e.g., two light guide plates, in substantially the same way as the illumination device 1 according to the first embodiment. In use of the respective illumination devices according to the second embodiment thus formed, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the respective illumination devices. Because the two light guide plates forming, e.g., the cross shape at the light guide section are overlapped, a part of the light reflected in a multiple number inside one of the light guide plates is outputted upon further multiple reflection inside the other light guide plate after entered into the other light guide plate overlapped adjacently with the one light guide plate. That is, the light of the light source entered from the incident surface of the light guide plate is diffused as diffused light. Accordingly, the light can be recognized as the good light source having few differences between brightness and darkness without making the viewer dazzling feeling.

Similarly, with the respective illumination devices according to the second embodiment, in substantially the same way as the illumination device 1 according to the first embodiment, it has excellent design feature by rendering the light guide plates arranged at the light guide section formed into various shapes. Therefore, if used, the respective illumination devices according to the second embodiment thus formed is useful not only as a conventional illumination device obtaining a certain illumination degree by radiating indoors, but also obtainable of prescribed staging effects for viewers who visually recognize the respective illumination devices at, e.g., restaurants or marriage ceremonies.

With the respective illumination devices according to the second embodiment, as different from the illumination device 1 according to the first embodiment, the recess or projecting patterns for outputting, as diffused light, the light of the light source section 30 entered from the incident surface are formed at the light guide plate arranged at the light guide section. Therefore, the respective illumination devices according to the second embodiment thus formed, can output the diffused light generated at the recess or projecting patterns formed at the light guide plates in addition to the light outputted through passing from the interior to the exterior of the light guide plate. The respective illumination devices according to the second embodiment render the major surface of the light guide plate activate as an area light source for emitting light approximately uniformly with the plural diffused lights generated at the respective patterns of the light guide plate by forming the recess or projecting patterns on the major surface of the light guide plate to be arranged in the matrix shape. The diffused lights generated at the respective patterns formed on the major surfaces of the light guide plates may not be felt as dazzling eyes of the viewers, so that it is visually recognized as gentle light close to natural by the viewers.

### [Third Embodiment]

Hereinafter, referring to Fig. 25, an illumination device 7 according to a third embodiment of the invention is described specifically.

The illumination device 7 according to the third embodiment of the invention includes: an electric power receiving section supplied with electric power from an external portion; a power source section connected to the electric power receiving section, converting the electric power into prescribed drive power; a light source section connected to the power source section, emitting light according the drive power; a housing section containing the light source section; and a light guide section arranged to project from the housing section, outputting, from a branched outgoing surface, the light of the light source section entered from an incident surface, and the light guide section is formed with a display surface indicating prescribed information by recess or projecting patterns on all or a part of the outgoing surface. The structure of the illumination device 7 according to the third embodiment of the invention may include: an electric power receiving section supplied with electric power from an external portion; a power source section connected to the electric power receiving section, converting the electric power into prescribed drive power; a light source section connected to the power source section, emitting light according the drive power; a housing section containing the light source section; and a light guide section arranged to project from the housing section, outputting, from a branched outgoing surface, the light of the light source section entered from an incident surface, and the light guide section is formed with the outgoing surface having recess or projecting patterns for outputting the light of the light source section as diffused light and is formed with a display surface indicating prescribed information by recess or projecting patterns on all or a part of the outgoing surface.

The illumination device 7 according to the third embodiment of the invention has a feature in having a light guide section 160 formed with a display surface indicating prescribed information with recess or projecting patterns. The structures of the third embodiment other than the above structures are substantially the same as those described in the first or second embodiment. More specifically, the illumination device 7 according to the third embodiment is structured of the electric power receiving section 10 made of the same specification as that in the illumination device 1 of the first embodiment, the power source section 20, the light source section 30, the housing section 40 and the light guide section 160 particular for the illumination device 7 of the third embodiment. In the third embodiment, the light guide section 160 having the structures different from those of the first and second embodiments is described mainly. The illumination device 7 according to the third embodiment of the invention may be constituted of either a structure in which the light guide section 100 of the illumination device 1 of the first embodiment is replaced with the light guide section 160 or a structure in which the respective light guide sections of the respective illumination devices of the second embodiment are replaced with the light guide section 160. It is to be noted that in the following description, the illumination device 7 according to the third embodiment of the invention is constituted of the structure in which the respective light guide sections of the respective illumination devices of the second embodiment are replaced with the light guide section 160.

The light guide section 160 constituting the illumination device 7 according to the third embodiment indicates prescribed information by forming a display surface 162S at a part of a light guide plate 162 projecting from a tip 161G of a light guide plate 161and by providing densely the recess or projecting patterns at the display surface 162S. The light guide section 160 thus formed is structured of the light guide plate 161 and the light guide plate 162. Hereinafter, the respective structures of the light guide section 160 are described. The light guide plate 161 is made of substantially the same specification as that of the light guide plate 111 of the light guide section 110 constituting the illumination device 2 in the second embodiment except specifications of the tip 161G and a tip 161G'. The tip 161G and the tip 161 G' of the light guide plate 161 have an indented center formed from two inclined surfaces facing each other.

Regarding the light guide plate 160, the light guide plate 162 is made of substantially the same specification as that of the light guide plate 112 of the light guide section 110 constituting the illumination device 2 in the second embodiment except the specifications of a tip 162G and a tip 162G' and except having a light guide piece 162E formed with a display surface 162S between a light guide piece 162A and a light guide piece 162D. The tip 162G of the light guide plate 162 has plural indented shapes made of plural inclined surfaces which are inclined alternatively. The tip 162G' of the light guide plate 162 has an indented center made of two inclined surfaces facing each other. The light guide piece 162E is not branched between a light guide piece 112B and a light guide piece 112C of the light guide plate 112, and is equivalent to what is formed in a united body. The light guide piece 162E thus formed is formed with the display surface 162S at a portion projecting from the tip 161G of the light guide plate 161 composed with the light guide plate 162, and the display surface 162S indicates prescribed information with the recess or projecting patterns. The prescribed information is made of, e.g., characters, diagrams, trade names, letters, or signs, or a combination of those. More specifically, an alphabetic letter of the large case "A" is displayed by providing densely, e.g., the recess or projecting patterns at the display surface 162S shown in Fig. 25. It is to be noted that the display surface 162S does not have any recess or projecting patterns formed in the matrix shape.

As described above, according to the illumination device 7 according to the third embodiment, in the same way as the respective illumination devices of the first and second embodiments, the outer shape of the light guide plate can be determined in compliance with environments of an institution or user's favorite. That is, with the illumination device 7 according to the third embodiment, light guide sections of such as, e.g., a spot type or a light bulb type having different light distribution characteristics and different design feature can be provided. More specifically, with the illumination device 7 according to the third embodiment, in substantially the same way as the respective illumination devices in the first and second embodiments, the surface area of the side surface rendering the light reflected in a multiple number in the interior of the light guide plate is increased by branching plurally the outgoing surface of the tip of the light guide plate formed at the light guide section. Accordingly, where the illumination device 7 according to the third embodiment thus formed is used, the light ratio directly outgoing to the exterior from the outgoing surface of the tip of the light guide plate is reduced, and the ratio of the light outgoing from the side surface of the light guide plate is increased, so that the illumination device can illuminate brightly its surroundings. That is, the illumination device 7 can widen the light directionality outgoing from the illumination devices. The light outgoing from the light guide plate further can suppress dazzling feeling on a viewer when entered in the eye of the viewer.

With the illumination device 7 of the third embodiment, in substantially the same way as the respective illumination devices in the first and second embodiments, the shape of the tip portion of the light guide plate formed at the light guide section is made of, e.g., a curving surface curving inward or outward, a frustum of a pyramid shape or circular truncated cone shape, or a shape formed with recesses formed in a cylindrical or cone shape having a prescribed depth. Accordingly, with use of the illumination device 7 of the third embodiment thus formed, the outgoing direction of the light outputted from the tip of the light guide plate can be controlled to be a prescribed angle; the light can be easily reflected in a multiple number within the light guide plate because a part of the light randomly reflected at the tip of the light guide plate is reflected toward the incident surface; the light outgoing from the tip of the light guide plate can be made as substantially convergence light or divergence light. That is, with use of the illumination device 7 of the third embodiment thus formed, the light intensity profile of the light outgoing from the light guide section of the illumination device 7 can be set arbitrarily, and light having a light intensity profile approximately equal from a direction perpendicular to the illumination device 7 to a horizontal direction can be outputted. It is to be noted that if the light guide plate is arranged as to project in widening itself in the horizontal direction as remoter from the housing section, the light can be outputted backward in addition of forward of the illumination device 7.

Similarly, with the illumination device 7 according to the third embodiment, the outer shape of the light guide plate formed at the light guide section is made in a cross shape by three-dimensionally intersecting and composing, e.g., two light guide plates, in substantially the same way as the respective illumination devices according to the first and second embodiments. In use of the illumination device 7 according to the third embodiment thus formed, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the illumination device 7. Because the two light guide plates forming, e.g., the cross shape at the light guide section are overlapped, a part of the light reflected in a multiple number inside one of the light guide plates is outputted upon further multiple reflection inside the other light guide plate after entered into the other light guide plate overlapped adjacently with the one light guide plate. That is, the light of the light source entered from the incident surface of the light guide plate is diffused as diffused light. Accordingly, the light can be recognized as the good light source having few differences between brightness and darkness without making the viewer dazzling feeling.

Similarly, with the illumination device 7 according to the third embodiment, in substantially the same way as the respective illumination devices according to the first and second embodiments, it has excellent design feature by rendering the light guide plates arranged at the light guide section formed into various shapes. Therefore, if used, the illumination device 7 according to the third embodiment thus formed is useful not only as a conventional illumination device obtaining a certain illumination degree by radiating indoors, but also obtainable of prescribed staging effects for viewers who visually recognize the illumination device 7 at, e.g., restaurants or marriage ceremonies.

With the illumination device 7 according to the third embodiment, as different from the illumination device 1 according to the first embodiment, the recess or projecting patterns for outputting, as diffused light, the light of the light source section 30 entered from the incident surface are formed at the light guide plate arranged at the light guide section. Therefore, the illumination device 7 according to the third embodiment thus formed, can output the diffused light generated at the recess or projecting patterns formed at the light guide plates in addition to the light outputted through passing from the interior to the exterior of the light guide plate. The illumination device 7 according to the third embodiment renders the major surface of the light guide plate activate as an area light source for emitting light approximately uniformly with the plural diffused lights generated at the respective patterns of the light guide plate by forming the recess or projecting patterns on the major surface of the light guide plate to be arranged in the matrix shape. The diffused lights generated at the respective patterns formed on the major surfaces of the light guide plates may not be felt as dazzling eyes of the viewers, so that it is visually recognized as gentle light close to natural by the viewers.

With the illumination device 7 according to the third embodiment, as different from the respective illumination devices according to the first and second embodiments, the display surface 162S is formed at a portion of one light guide plate projecting from the tip of another light guide plate, and prescribed information is indicated at the display surface 162S with the recess or projecting patterns. Accordingly, where, for example, a name of the institution using the illumination device 7 is provided on the display surface 162S, the illumination device 7 according to the third embodiment thus formed improves design feature and renders users memorize easily such as, e.g., the name of the institution by its visual effects

### [Fourth Embodiment]

Hereinafter, referring to Fig. 26 through Fig. 30, an illumination device according to a fourth embodiment of the invention is described specifically.

The illumination device according to the fourth embodiment of the invention includes: an electric power receiving section supplied with electric power from an external portion; a power source section connected to the electric power receiving section, converting the electric power into prescribed drive power; a light source section connected to the power source section, emitting light according the drive power; a housing section containing the light source section; and a light guide section arranged to project from the housing section, outputting, from a branched outgoing surface, the light of the light source section entered from an incident surface, and the housing section is formed with an angle adjusting section for adjusting an angle for mounting the light guide section. The structure of the illumination device according to the fourth embodiment of the invention may include: an electric power receiving section supplied with electric power from an external portion; a power source section connected to the electric power receiving section, converting the electric power into prescribed drive power; a light source section connected to the power source section, emitting light according the drive power; a housing section containing the light source section; and a light guide section arranged to project from the housing section, outputting, from a branched outgoing surface, the light of the light source section' entered from an incident surface, and the light guide section is formed with the outgoing surface having recess or projecting patterns for outputting the light of the light source section as diffused light whereas the housing section is formed with an angle adjusting section for adjusting an angle for arranging the light guide section.

Similarly, the structure of the illumination device according to the fourth embodiment of the invention may include: an electric power receiving section supplied with electric power from an external portion; a power source section connected to the electric power receiving section, converting the electric power into prescribed drive power; a light source section connected to the power source section, emitting light according the drive power; a housing section containing the light source section; and a light guide section arranged to project from the housing section, outputting, from a branched outgoing surface, the light of the light source section entered from an incident surface, and the light guide section is formed with the outgoing surface having recess or projecting patterns for outputting the light of the light source section as diffused light and is formed with a display surface indicating prescribed information by recess or projecting patterns on all or a part of the outgoing surface, whereas the housing section is formed with an angle adjusting section for adjusting an angle for arranging the light guide section.

The illumination device according to the fourth embodiment of the invention has a feature in having the housing section 50 capable of adjusting an angle of a light guide section 170 and a light guide plate formed at the light guide section 170. The structures of the fourth embodiment other than the above structures are substantially the same as those described in the first or second embodiment. More specifically, the illumination device according to the fourth embodiment is structured of the electric power receiving section 10 made of the same specification as that in the illumination device 1 of the first embodiment, the power source section 20, and the light source section 30, as well as the housing section 50 capable of adjusting an angle of the light guide section 170 and the light guide plate formed at the light guide section 170 particular for the illumination device of the fourth embodiment. In the fourth embodiment, the light guide section 170 and the housing 50 having the structures different from those of the first and second embodiments is described mainly. The illumination device according to the fourth embodiment of the invention may have a structure in which any of the respective light guide sections and the respective housing sections according to the illumination device 1 of the first embodiment, the respective illumination devices of the second embodiment, or the illumination device 7 of the third embodiment is replaced with the light guide section 170 or the housing section 50.

The light guide section 170 structuring the illumination device of the fourth embodiment is made of a light guide plate 171. The light guide plate thus formed is formed with a base portion 171 A and eight light guide pieces 171B through 171I. More specifically, in the light guide plate 171, the light guide piece 171B through the light guide piece 171I made in a polygonal prism shape, respectively, extend to be formed into a cross shape and molded in a united body with or jointed to a one surface of the base portion 171A made in, e.g., a disc shape. The recess or projecting patterns are formed on one or more surfaces of the light guide piece 171 B through the light guide piece 171I of the light guide plate 171. It is to be noted that in Fig. 26 through Fig. 30, illustration of the recess or projecting patterns is omitted from the light guide piece 171 B through the light guide piece 171I of the light guide plate 171. As shown in Fig. 30, the recess or projecting patterns are densely formed as to indicate, e.g., a star shape without forming the recess or projecting patterns in a matrix shape at a part of a one major surface 171 V of the light guide piece 171E of the light guide plate 171 and a tip 171 S of the light guide piece 171D. It is to be noted that a hemisphere resin, not shown, may be jointed as a lens to, e.g., the star shape indicated from the dense recess or projecting patterns on the tip 171S of the light guide piece 171D, thereby shrinking or enlarging the star shape to be projected on a wall surface or the like.

The housing 50 structuring the illumination device of the fourth embodiment is constituted of an angle adjusting section 51, a holding section 52, a jointing section 53, a protecting section 54, and a securing section 55. Hereinafter, the respective structures of the housing section 50 are described. Regarding the angle adjusting section 51 of the housing section 50, a substrate 32 mounting the light source 31 is mounted on a mounting member 51B formed in, e.g., a disc shape. A pivot member 51C coupled to the mounting member 51B and formed in a sphere shape is contained pivotally in a hole not shown formed in a containing member 52B of the holding section 52. An upper securing member 51D is formed in, e.g., a disc shape and has an opening extending in a cross shape passing the light guide piece 171B through the light guide piece 171I of the light guide plate 171 therethrough. In a state that the base portion 171 A of the light guide plate 171 and the substrate 32 are contained between the upper securing member 51D and the mounting member 51 B, the upper securing member 51D and the mounting member 51B are secured in a united manner by securing members made of, e.g., screws, not shown. An end of an inner peripheral surface of a protecting member 51A made in a cylindrical shape is connected with, e.g., an adhesive to an outer peripheral surface of the upper securing member 51D. The holding section 52 of the housing section 50 provides a containing member 52B formed with a hole, not shown, for pivotally containing the pivotal member 51C of the angle adjusting section 51 above the holding member 52A formed in, e.g., a cone shape. A groove formed at an inner periphery of an adjusting member 52C formed in, e.g., a disc shape is coupled in an engaging manner with a groove formed at an outer periphery of the containing member 52B. Where the adjusting member 52C thus formed is rotated in a prescribed direction, the groove formed at the inner periphery of the adjusting member 52C f engages in an urging manner with and is fastened to the groove formed at the outer periphery of the containing member 52B.

Regarding the housing section 50, the jointing section 53 is secured in a state that an end of the jointing section 53 is inserted into a lower end of the holding member 52A of the holding section 52. The jointing section 53 thus formed is made in a cylindrical shape formed on a screw groove on the outer periphery. It is to be noted that the jointing section 53 is coupled to, e.g., a screw hole, not shown, formed in the electric power receiving section 10. The protecting section 54 of the housing section 50 is formed in a cylindrical shape for protecting the angle adjusting section 51 and the holding section 52 by containing those inside. The protecting section 54 secures the angle adjusting section 51 at a prescribed angle by passing plural securing members 55 made of, e.g., a pan head screw through screw holes formed in an outer peripheral surface 54F of the protecting section 54 with a constant interval and by urging the tip of the securing members 55 toward the outer peripheral surface of the protecting member 51 A of the angle adjusting section 51.

As described above, according to the illumination device according to the fourth embodiment, in the same way as the respective illumination devices of the first through third embodiments, the outer shape of the light guide plate can be determined in compliance with environments of an institution or user's favorite. That is, with the illumination device according to the fourth embodiment, light guide sections of such as, e.g., a spot type or a light bulb type having different light distribution characteristics and different design feature can be provided. More specifically, with the illumination device according to the fourth embodiment, in substantially the same way as the respective illumination devices in the first through third embodiments, the surface area of the side surface rendering the light reflected in a multiple number in the interior of the light guide plate is increased by branching plurally the outgoing surface of the tip of the light guide plate formed at the light guide section. Accordingly, where the illumination device according to the fourth embodiment thus formed is used, the light ratio directly outgoing to the exterior from the outgoing surface of the tip of the light guide plate is reduced, and the ratio of the light outgoing from the side surface of the light guide plate is increased, so that the illumination device can illuminate brightly its surroundings. That is, the illumination device can widen the light directionality outgoing from the illumination devices. The light outgoing from the light guide plate further can suppress dazzling feeling on a viewer when entered in the eye of the viewer.

With the illumination device of the fourth embodiment, in substantially the same way as the respective illumination devices in the first through third embodiments, the shape of the tip portion of the light guide plate formed at the light guide section is made of, e.g., a curving surface curving inward or outward, a frustum of a pyramid shape or circular truncated cone shape, or a shape formed with recesses formed in a cylindrical or cone shape having a prescribed depth. Accordingly, with use of the illumination device of the fourth embodiment thus formed, the outgoing direction of the light outputted from the tip of the light guide plate can be controlled to be a prescribed angle; the light can be easily reflected in a multiple number within the light guide plate because a part of the light randomly reflected at the tip of the light guide plate is reflected toward the incident surface; the light outgoing from the tip of the light guide plate can be made as substantially convergence light or divergence light. That is, with use of the illumination device of the fourth embodiment thus formed, the light intensity profile of the light outgoing from the light guide section of the illumination device can be set arbitrarily, and light having a light intensity profile approximately equal from a direction perpendicular to the illumination device to a horizontal direction can be outputted. It is to be noted that if the light guide plate is arranged as to project in widening itself in the horizontal direction as remoter from the housing section, the light can be outputted backward in addition of forward of the illumination device.

Similarly, with the illumination device according to the fourth embodiment, the outer shape of the light guide plate formed at the light guide section is made in a cross shape by three-dimensionally intersecting and composing, e.g., two light guide plates, in substantially the same way as the respective illumination devices according to the first through third embodiments. In use of the illumination device according to the fourth embodiment thus formed, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the illumination device. Because the two light guide plates forming, e.g., the cross shape at the light guide section are overlapped, a part of the light reflected in a multiple number inside one of the light guide plates is outputted upon further multiple reflection inside the other light guide plate after entered into the other light guide plate overlapped adjacently with the one light guide plate. That is, the light of the light source entered from the incident surface of the light guide plate is diffused as diffused light. Accordingly, the light can be recognized as the good light source having few differences between brightness and darkness without making the viewer dazzling feeling.

Similarly, with the illumination device according to the fourth embodiment, in substantially the same way as the respective illumination devices according to the first through third embodiments, it has excellent design feature by rendering the light guide plates arranged at the light guide section formed into various shapes. Therefore, if used, the illumination device according to the fourth embodiment thus formed is useful not only as a conventional illumination device obtaining a certain illumination degree by radiating indoors, but also obtainable of prescribed staging effects for viewers who visually recognize the illumination device at, e.g., restaurants or marriage ceremonies.

With the illumination device according to the fourth embodiment, in substantially the same way as the respective illumination devices according to the second through third embodiments, the recess or projecting patterns for outputting, as diffused light, the light of the light source section 30 entered from the incident surface are formed at the light guide plate arranged at the light guide section. Therefore, the illumination device according to the fourth embodiment thus formed, can output the diffused light generated at the recess or projecting patterns formed at the light guide plates in addition to the light outputted through passing from the interior to the exterior of the light guide plate. The illumination device according to the fourth embodiment renders the major surface of the light guide plate activate as an area light source for emitting light approximately uniformly with the plural diffused lights generated at the respective patterns of the light guide plate by forming the recess or projecting patterns on the major surface of the light guide plate to be arranged in the matrix shape. The diffused lights generated at the respective patterns formed on the major surfaces of the light guide plates may not be felt as dazzling eyes of the viewers, so that it is visually recognized as gentle light close to natural by the viewers.

With the illumination device according to the fourth embodiment, in substantially the same way as the illumination device 7 according to the third embodiment, prescribed information is indicated by densely providing the recess or projecting patterns on a major surface and a part of a tip of the light guide plate arranged at the light guide section. Accordingly, the illumination device according to the fourth embodiment thus formed can improve design feature and renders users memorize easily the prescribed information to be notified.

With the illumination device according to the fourth embodiment, as different from the first through third embodiments, the light guide plate of the light guide section arranged at the illumination device can be adjusted by be changed to an arbitrary angle. Accordingly, the illumination device according to the fourth embodiment thus formed can adjust the angle of the light guide plate arbitrarily regardless the angle of a socket formed at an indoor institution for fitting the base 11 of the electric power receiving section 10 of the illumination device in a screwing manner. More specifically, the illumination device according to the fourth embodiment can illuminate indoors effectively by inclining the light guide plate provided at the illumination device downward even where, for example, a socket is formed horizontally at a top of a side wall of an indoor institution.

Next, a manufacturing method for light guide plate provided respectively at the illumination devices of the first through fourth embodiments of the invention is described specifically in referring to Fig. 31 through Fig. 35.

For the manufacturing method for light guide plate provided at the illumination device 1 of the first embodiment, for example, molding process and cutting process can be used. Hereinafter, respective manufacturing methods are described. In molding process, a shape reflecting an outer shape of the light guide plate to be molded are formed inside a mold; a resin heated and softened is injected into the mold attached to, e.g., an injection molding machine; the outer shape of the light guide plate is formed by cooling the resin. In cutting process, a substrate material is subject to cutting by an endmill process using, e.g., a milling machine, thereby forming the outer shape of the light guide plate.

For the manufacturing method for light guide plate provided at the respective illumination devices of the second to fourth embodiments, for example, used are, e.g., ultrasound process, heating process, cutting process, laser process, molding process, and screen printing process. Hereinafter, the respective manufacturing methods are described. In ultrasound process, recess patterns are formed on a surface by partly melting the surface of the light guide plate using vibration of ultrasound of ultrasound processing horn contacting to the surface of the light guide plate. In heating process, recess patterns are formed on a surface by partly melting the surface of the light guide plate using heat of a processing tool contacting o the surface of the light guide plate. Similarly, in cutting process, recess patterns are formed on a surface by partly cutting off the surface of the light guide plate using a cutting tool rotating against or urged to the surface of the light guide plate while contacting. Similarly, in laser process, recess patterns are formed on a surface by partly melting the surface of the light guide plate using heat of the laser beam converged on the surface of the light guide plate.

Similarly, for the manufacturing method for light guide plate provided at the respective illumination devices of the second through fourth embodiments, in molding process, a shape reflecting an outer shape of the light guide plate to be molded is formed inside a mold; a resin heated and softened is injected into the mold attached to, e.g., an injection molding machine; recess patterns, projecting patterns, or recess and projecting patterns are formed on the surface of the light guide plate by cooling the resin. Similarly, in screen printing process, a plate or screen opening prescribed holes is made in contact with the surface of the light guide plate; a setting type resin is made to cover the surface partly upon attaching the resin on the surface through the holes, thereby forming projecting patterns on the surface. The resin used for molding process or screen printing process may be added with, e.g., a diffusion material in a fine particle shape for emitting diffused light. Similarly, the resin serving as a material of the light guide plate subjecting to the ultrasound process, the heating process, the cutting process, the laser process, as described above, may be a resin added with, e.g., a diffusion material in a fine particle shape for emitting diffused light

Regarding the manufacturing method for light guide plate provided at the respective illumination devices of the second through fourth embodiments, a light guide plate may be formed in combination of the ultrasound process, the heating process, the cutting process, the laser process, the molding process, and the screen printing process as described above. More specifically, recess patterns may be formed on the surface of the light guide plate by, e.g., ultrasound process where the outer shape of the light guide plate only is formed by, e.g., the molding process. Similarly, projecting patterns may be formed on the surface of the light guide plate by, e.g., screen printing process where the outer shape of the light guide plate only is formed by, e.g., the molding process.

Regarding the manufacturing method for light guide plate by the ultrasound process, a ultrasound fabrication apparatus and an ultrasound fabrication method done by the ultrasound fabrication apparatus are described in referring to Fig. 31 through Fig. 35. The ultrasound fabrication apparatus 1000 as shown in Fig. 31 includes a housing 1010 mounting and containing respective structural devices forming the ultrasound fabrication apparatus 1000, a work table 1020 securing a light guide plate substrate D as a substrate material to later form the light guide plate by, e.g., vacuum suction, a transfer mechanism 1030 transferring the ultrasound processing portion 1040 described below correlatively with respect to the light guide plate substrate D, the ultrasound processing portion 1040 heating and melting partly a major surface of the light guide plate substrate D by ultrasound vibration upon contacting projecting portions of the ultrasound processing horn 1042 to the major surface of the light guide plate substrate D to form recess patterns, and a controller 1050 controlling ultrasound processing done by the ultrasound processing portion 1040 based on fabrication conditions for the light guide plate substrate D. Hereinafter, the respective structural devices for constituting the ultrasound fabrication apparatus 1000, including the housing 1010, the work table 1020, the transfer mechanism 1030, the ultrasound processing portion 1040, and the controller 1050, are described. For conveniences of the description, the description is made using a three-dimensional orthogonal coordinate or two-dimensional orthogonal coordinate shown in each drawing.

The housing 1010 forming the ultrasound fabrication apparatus 1000 mounts and contains as shown in, e.g., Fig. 31, the respective structural devices for constituting the ultrasound fabrication apparatus 1000. The housing 1010 thus formed is made of an upper stage plate 1011, supports 1012, a lower stage plate 1013, and legs 1014. Hereinafter, the structure of the housing 1010 is described. The upper stage plate 1011 and the lower stage plate 1013 of the housing 1010 are made of a stainless steel and made in a plate shape. A controller 1034 for the transfer mechanism 1030, a ultrasound vibrator 1043 for the ultrasound processing portion 1040, and a controlling device 1054 of the controller 1050, etc. are mounted on the lower stage plate 1013 thus formed. The support 1012 of the housing 1010 is made of, e.g., stainless steel and of a hollow square bar in a bar shape. A support member 1051 of the controller 1050 is attached to the support 1012 of the housing 1010 thus formed. The leg 1014 of the housing 1010 is made in a cylindrical shape and made of, e.g., enforced plastic.

The work table 1020 forming the ultrasound fabrication apparatus 1000 secures the light guide plate substrate D as a substrate material to later form the light guide plate by, e.g., vacuum suction as shown in, e.g., Fig. 31. The work table 1020 thus formed is constituted of a processing base 1021, a vacuum pump 1022, suction pipes 1023, distributors 1024, and connectors 1025. Hereinafter, the structure of the work table 1020 is described. The processing base 1021 of the work table 1020 is made of, e.g., aluminum and formed of a plate shaped member having plural suction holes 1021 A. The processing base 1021 thus formed is provided at the upper stage plate 1011 of the housing 1010. As shown in, e.g., Fig. 32, one end of the suction pipes 1023 is coupled to the vacuum pump 1022, whereas the other ends of the suction pipes 1023 are coupled to the suction holes 1021 A provided in a plural number in the processing base 1021 as shown in, e.g., Fig. 33 via the distributors 1024 in use of the connectors 1025. It is to be noted that the vacuum suction of the light guide plate substrate D toward the suction holes 1021 A of the processing base 1021 prevents the light guide plate substrate D from positionally shifting during the processing and corrects warp and bending of the light guide plate substrate D.

The transfer mechanism 1030 forming the ultrasound fabrication apparatus 1000 makes the ultrasound processing portion 1040 correlatively move with respect to the light guide plate substrate D secured to the processing base 1020 as shown in, e.g., Fig. 31. More specifically, the transfer mechanism 1030 renders the ultrasound processing portion 1040 move to a prescribed position in X-axis, Y-axis, and Z-axis directions shown in Fig. 31 based on positional information for the light guide plate substrate D inputted from, e.g., the control panel 1052 of the controller 1050. The transfer mechanism 1030 thus formed includes an X-axis rail member 1031, an auxiliary X-axis rail member 1031', a Y-axis rail member 1032, a Z-axis rail member 1033, and a controller 1034. The controller 1034 is a control device for transferring the ultrasound processing portion 1040 to the prescribed position using the respective rail members based on the processing information of the light guide plate substrate D entered from the control panel 1052 of the controller 1050.

The ultrasound processing portion 1040 forming the ultrasound fabrication apparatus 1000 as shown in, e.g., Fig. 33 forms recess patterns by partly heating and melting the major surface with ultrasound vibration upon contacting projections of the ultrasound processing horn 1042 to the major surface of the light guide plate substrate D. The ultrasound processing portion 1040 thus formed is constituted of a support member 1041, the ultrasound processing horn 1042, and the ultrasound vibrator 1043. More specifically, the ultrasound processing horn 1042 of the ultrasound processing portion 1040 is couple to the support member 1041 arranged at a plate 1033B connected to a movable table 1033A of the Z-axis rail member 1033, and is constituted of a tip portion 1042B for performing ultrasound processing treatment upon contacting to a surface of the light guide plate substrate D based on a drive signal supplied from the ultrasound vibrator 1043, and a vibrator 1042A having a piezoelectric element and a corn member, not shown. As shown in Fig. 33(a), the plate 1033B of the Z-axis rail member 1033 is formed with a stopper member 1033D provided via a support block 1033C and supports the ultrasound processing portion 1040. When the ultrasound processing portion 1040 begins moving in a lower direction in the drawing and when the tip portion 1042B of the ultrasound processing horn 1042 contacts the surface of the light guide plate substrate D, the ultrasound processing portion 1040 stops as shown in Fig. 33(b), and the ultrasound processing horn 1042 goes up a prescribed time later after the support block 1033C and the stopper member 1033D separate from each other.

As for the ultrasound processing portion 1040 forming the ultrasound fabrication apparatus 1000, the ultrasound processing horn 1044 shown in Fig. 34 and Fig. 35 has more fabrication dots 1045 serving as projections for forming recess patterns by heating partly and melting the major surface of the light guide plate substrate D, in comparison with the ultrasound processing horn 1042 shown in Fig. 33 or the like. More specifically, the fabrication dots 1045 are formed in a matrix shape of 54 x 29 with a pitch of 2 mm in a range of 110 mm x 60 mm at a tip portion of the ultrasound processing horn 1044. The shape of the fabrication dots 1045 is in a pyramid shape having inclined surfaces of 45 degrees. If the fabrication dots 1045 to which the ultrasound applies come into contact with the surface of the light guide plate substrate D, the light guide plate substrate D is partly heated and melted by vibration of the ultrasound, thereby forming recess patterns made of a pyramid shape reflecting the shape of the fabrication dots 1045 on the surface of the light guide plate substrate D. When the ultrasound processing horn 1044 thus formed is used, recess patterns can be formed on the major surface of the light guide plate by performing ultrasound processing one time if the size of the major surface of the light guide plate is equal to or less than 110 mm x 60 mm, thereby reducing tact time for processing the light guide plate. It is to be noted that the size of the tip portion of the ultrasound processing horn 1044 or pitch and shape of the fabrication dots 1045 are not limited to the specifications described above. In the respective illumination devices according to the first through fourth embodiments of the invention, the size of the major surface of the light guide plate formed at the light guide section is, e.g., 110 mm x 60 mm, and if the recess patterns are formed in a matrix shape with a pitch of 2 mm through 2.5 mm to the region of 110 mm x 60 mm thus formed, the respective diffused light generated at the plural recess patterns are visually recognized as like a prescribed pattern for a viewer, so that the illumination devices improve their design feature.

The controller 1050 forming the ultrasound fabrication apparatus 1000 does control of ultrasound processing made by the ultrasound processor 1040 under the processing condition of the light guide plate substrate D, as shown in, e.g., Fix.31. The controller 1050 thus formed is composed of a support member 1051, a control panel 1052, a display panel 1053, and a controlling device 1054. The following is a description of the composition of the controller 1050. The support member 1051 in the controller 1050 is provided in any one of the plural supports 1012 arranged at the housing 1010, and formed with the control panel 1052 and the display panel 1053. The control panel 1052 in the controller 1050 is for users to input the processing conditions and the like of the light guide plate substrate D to the controlling device 1054. The display panel 1053 of the controller 1050 displays the processing conditions and the like of the light guide plate substrate D entered from the control panel 1052. The controlling device 1054 in the controller 1050 is constituted of a control substrate for operating the whole ultrasound fabrication apparatus 1000 based on prescribed control and a memory recording control conditions.

Finally, structures and main advantages of the illumination devices according to the invention, as described above, are described on a claim basis.

The illumination device 1 as set forth in claim 1 includes an electric power receiving section 10 supplied with electric power from an external portion, a power source section 20 connected to the electric power receiving section 10, converting the electric power into prescribed drive power, a light source section 30 connected to the power source section 20, emitting light according the drive power, a housing section 40 containing the light source section 30, and a light guide section 100 through light guide plate 170 arranged to project from the housing section 40, outputting, from a branched outgoing surface, light of the light source section 30 entered from an incident surface. According to the illumination device 1 as set forth in claim 1, the light ratio directly outgoing to the exterior from the outgoing surface of the tip of the light guide plate formed at the light guide section 100 through the light guide section 170 is reduced, and the ratio of the light outgoing from the side surface of the light guide plate is increased, so that the illumination device can illuminate brightly its surroundings. That is, the illumination device 1 can widen the light directionality outgoing from the illumination devices. The light outgoing from the light guide plate further can suppress dazzling feeling on a viewer when entered in the eye of the viewer. With the light guide section 100 through the light guide section 170, because the two light guide plates forming, e.g., the cross shape at the light guide section are overlapped, a part of the light reflected in a multiple number inside one of the light guide plates is outputted upon further multiple reflection inside the other light guide plate after entered into the other light guide plate overlapped adjacently with the one light guide plate. That is, the light of the light source entered from the incident surface of the light guide plate is diffused as diffused light. Accordingly, the light can be recognized as the good light source having few differences between brightness and darkness without making the viewer dazzling feeling.

The illumination device 2 through the illumination device 6 as set forth in claim 2 have a feature that the outputting surface of the light guide section 110 through the light guide section 150 is formed with a recess or projecting pattern for outputting the light of the light source section 30 as diffused light. The illumination device 2 through the illumination device 6 as set forth in claim 3 have a feature that the light guide section 110 through the light guide section 150 as set forth in claim 2 are formed with one or more of the outgoing surface. According to the illumination device 2 through the illumination device 6 as set forth in claim 2 and claim 3, by forming the recess or projecting patterns on the major surface of the light guide plate formed at the light guide section 110 through the light guide section 150 to be arranged in the matrix shape , the major surface of the light guide plate can be activated as an area light source for emitting light approximately uniformly with the plural diffused lights generated at the respective patterns of the light guide plate. The diffused lights generated at the respective patterns formed on the major surfaces of the light guide plates may not be felt as dazzling eyes of the viewers, so that it is visually recognized as gentle light close to natural by the viewers.

The illumination device 1 as set forth in claim 4 has a feature that a cross section in a horizontal direction of the light guide section extends in a direction remoter from the incident surface and is formed with the outgoing surfaces facing each other, likewise a cross section of, e.g., the light guide plate 107 shown in Fig. 13 radially extending from a center of the housing section 40, or likewise a cross section of the light guide plate not shown but formed in a three way radially extending manner from the center of the housing section 40 in substantially the same way. The illumination device 1 as set forth in claim 5 has a feature that the light guide section 100 through the light guide section 170 are formed to extend in a cross shape when viewed in a perpendicular direction and has eight or more of the outgoing surfaces. In accordance with the illumination device 1 as set forth in claim 4 and claim 5, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the illumination device 1.

The illumination device 1 as set forth in claim 6 has a feature that the light guide section has a cross section in a horizontal direction extending in a shape, with a space inside, of a polygon corresponding to, e.g., the light guide plate 105 and the light guide plate 105' as shown in Fig. 13, a circle corresponding to, e.g., similarly, the light guide plate 106 and the light guide plate 106' as shown in Fig. 13, an oval, or a pyramid having a cross section made smaller as remoter from the incident surface. The illumination device 1 as set forth in claim 7 has a feature that the light guide section has a cross section in a horizontal direction extending in a shape of a polygon, a circle, an oval, or a pyramid having a cross section made smaller as remoter from the incident surface. The illumination device 1 as set forth in claim 8 has a feature that the light guide section has a cross section in a horizontal direction made larger or smaller as remoter from the incident surface. According to the illumination device 1 as set forth in claim 6 through claim 8, therefore, because the light guide sections are fabricated to have particular shapes, respectively, multiple reflections easily occur inside the light guide plate, the illumination device has an excellent design feature and can suppress differences of the light intensity profile otherwise occurring due to a viewing angle.

The illumination device 1 as set forth in claim 9 has a feature that the light guide plate 100 through the light guide plate 170 are formed with plural light guide piece whose outgoing surface is branched. The illumination device 1 as set forth in claim 10 has a feature that the light guide piece as set forth in claim 9 is provided in a plural number so as to make a length from the incident surface becomes equal or different. The illumination device 1 as set forth in claim 11 has a feature that the light guide piece as set forth in claim 9 is formed with a curving surface or an inclined surface. The illumination device 1 as set forth in claim 12 has a feature that the light guide piece as set forth in claim 9 is formed with a recess formed in a cylindrical shape or cone shape having a prescribed depth. The illumination device 1 as set forth in claim 13 has a feature that the light guide piece as set forth in claim 9 is formed in a frustum of a pyramid shape or circular truncated cone shape. The illumination device 1 as set forth in claim 14 has a feature that the light guide piece as set forth in claim 9 extended from the incident surface is formed in a shape of a polygon, a circle, an oval, or a pyramid having a cross section made smaller as remoter from the incident surface. According to the illumination device 1 as set forth in claim 9 through claim 14, the outgoing direction of the light outputted from the tip of the light guide plate formed at the light guide section 100 through the light guide section 170 can be controlled to be a prescribed angle; the light can be easily reflected in a multiple number within the light guide plate because a part of the light randomly reflected at the tip of the light guide plate is reflected toward the incident surface; the light outgoing from the tip of the light guide plate can be made as substantially convergence light or divergence light. That is, with use of the illumination device 1 of the first embodiment thus formed, the light intensity profile of the light outgoing from the light guide section of the illumination device 1 can be set arbitrarily, and light having a light intensity profile approximately equal from a direction perpendicular to the illumination device 1 to a horizontal direction can be outputted. It is to be noted that if the light guide plate is arranged as to project in widening itself in the horizontal direction as remoter from the housing section, the light can be outputted backward in addition of forward of the illumination device 1.

The illumination device 1 as set forth in claim 15 has a feature that the light guide piece as set forth in claim 9 is combined and formed in which the incident surface of one of the light guide pieces of the light guide section 100 through the light guide section 170 is inserted into a cutoff portion or projecting portion of another of the light guide pieces of the light guide section 100 through the light guide section 170 whose tip is branched off. According to the illumination device 1 as set forth in claim 15, a three-dimensional shape in need can be easily obtained by arbitrarily composing the plurality of the light guide section 100 through the light guide section 170. Where, e.g., two light guide plates provided at the light guide section 100 through the light guide section 170are three-dimensionally intersected and composed to form a cross shape, the light outgoing from the major surface of the light guide plate can be outputted without shielded by another light guide plate adjacent to the light guide plate. The light guide plate formed at the light guide section is transparent, and therefore, the other major surface can be visually recognized over the one major surface of the light guide plate, whereas, e.g., one major surface of the light guide plate can be visually recognized over the one major surface of another light guide plate. That is, differences between brightness and darkness of light outputted from the light guide plate can be suppressed when the light guide plate is viewed from any direction in a circumferential direction of the illumination device 1.

The illumination device 2 through the illumination device 6 as set forth in claim 16 have a feature that the recess or projecting pattern as set forth in claim 2 is formed to the outgoing surfaces facing each other in a manner that the recess or projecting pattern is at the same position between the outgoing surfaces facing each other or at not the same position between the outgoing surfaces facing each other. According to the illumination device 2 through the illumination device 6 as set forth in claim 16, by forming the recess or projecting pattern in a manner that the recess or projecting pattern is at not the same position between the outgoing surfaces facing each other, differences between brightness and darkness of the light outputted from the light guide plate because the number of the patterns generating the diffused light visually recognized by eyes of the viewer is increased. The illumination device 2 through the illumination device 6 as set forth in claim 17 have a feature that the recess or projecting patterns as set forth in claim 2 are formed to the outgoing surfaces facing each other as to become deeper as located remoter from the incident surface. According to the illumination device 2 through the illumination device 6 as set forth in claim 17, because the light intensity is correlatively lowered as going from the incident surface to the tip of the light guide plate, the intensity of the diffused light generated is increased by forming the depths of the recess or projecting patterns to become deeper stepwisely as going from the incident surface to the tip of the light guide plate, thereby averaging the intensity of the diffused light generated from the plural patterns.

The illumination device 2 through the illumination device 6 as set forth in claim 18 have a feature that the recess pattern as set forth in claim 2 is formed by one or more of processes including a ultrasound process, a heating process, a cutting process, a laser process, and a molding process. The illumination device 2 through the illumination device 6 as set forth in claim 18 have a feature that the projecting pattern as set forth in claim 2 is formed by one or more of processes including a molding process, and a screen printing process. According to the illumination device 2 through the illumination device 6 as set forth in claim 18 and claim 19, the recess pattern and projecting pattern can be formed stably with good accuracy at the light guide plate. The illumination device 1 as set forth in claim 20 has a feature that the light guide section 100 through the light guide section 170 is coated with a silicone coating agent or a glass coating agent, or is covered with a transparent resin. According to the illumination device 1 as set forth in claim 20, the light guide section 100 through the light guide section 170 can be made as waterproof, dirty-proof, and dustproof.

The illumination device 1 as set forth in claim 21 has a feature that the light source section 30 is arranged to extend radially from a center of the housing section 40. The illumination device 1 as set forth in claim 22 has a feature that the light source section 30 as set forth in claim 21 is arranged to extend radially in a manner of a three-way shape or a cross shape. According to the illumination device 1 as set forth in claim 21 and claim 22, an optimized optical alignment is available in compliance with the shape of the incident surface of the light guide section 100 through the light guide section 170. The illumination device 1 as set forth in claim 23 has a feature that the housing section 40 is provided with a heat dissipating section for dissipating heat generated at the light source section 30. According to the illumination device 1 as set forth in claim 23, by dissipating heat generated at the light source section 30 with good efficiency, the light source section 30 can be prevented from emitting with a lowered light amount due to heat saturation.

The illumination device 1 as set forth in claim 24 has a feature that the housing section 40 is formed with a holding section for fitting with and securing the light guide section, and that the holding section is formed with an untransparent reflection layer covering the light source section 30 and reflecting light toward the light guide section 100 through the light guide section 170. The illumination device1 as set forth claim 25 has a feature that the holding section as set forth in claim 24 is formed with a securing hole for securing the housing section with a securing member, and that the securing hole is sealed with an adhesive containing a reflection material after the holding section is secured with the securing member. According to the illumination device 1 as set forth in claim 24 and claim 25, the device can reduce reflection loss at the light guide section 100 through the light guide section 170, and can hold tightly the light guide section 100 through the light guide section 170 at the housing section 40.

### Description of Reference Numbers

1,2,3,4,5,6,7 illumination device
10 electric power receiving section
11 base
12 isolation casing
12A one end
12B the other end
12C connecting portion
12D inner space
12E screw hole
13 insulation casing cover
13A connecting portion
13B screw hole
13C wiring hole
20 power source section
21 power source unit
30 light source unit
31 light source
32 substrate
32A screw hole
32B wiring hole
40 housing section
41 housing
41 A one surface
41B hole
41C wiring hole
41D screw hole
41E,41E',41E" outer peripheral surface
41 F engagement groove
42 outer peripheral cover
42A connection portion
43 holding member
43A groove portion
43B projecting portion
43C side wall
43D hole
44 securing member
45 securing member
50 housing section
51 angle adjusting section
51A protecting member
51 B mounting member
51C pivot member
51D upper securing member
52 holding section
52A holding member
52B containing member
52C adjusting member
53 joint section
54 protecting section
54A outer peripheral surface
54B screw hole
55 securing member
100,110,120,130,140,150,160,170 light guide section
101,102,103,104A,104B,104C,104D,104E,104F,104G,104H,105,105',106,106',107,107',111,1 12,113,114,115,116C,116D,116E,116F,117,121,122,131,132,141,142,151,152,161,162,171 light guide plate
101A,101B,101C,101D,102A,102B,102C,102D,103A,103B,103C,103D,104A',104B',104C',10 4D',104E',104F',104G',104H',111A,111B,111C,111D,112A,112B,112C,112D,113A,113B,113 C,113D,114A,114B,114C,114D,115A,I15B,115C,115D,121A,121B,121C,121D,122A,122B,12 2C,122D,131A,131B,132A,132B,141A,141B,151A,151B,151C,151D,152A,152B,152C,152D,1 62A,162D,162E,171B,171C,171D,171E,171F,171G,171H,171I light guide piece
101F,102F,103F,111F,112F,113F,114F,115F,117F incident surface
101G,101G',102G,102G',103G,103G',111G,111G',112G,112G',113G,113G',114G,114G',115G,1 15G',121G,122G,131G,132G,141G,142G,151G,152G_{.}161G,161G',162G,162G',171S tip
101H, 102H, 111H, 112H engagement portion
102J,112J joint portion
101L,101M,101N,102L,102M,102N,103L,103M,103N,111L,111M,111N,112L,112M,112N,113 L,113M,113N,114L,114M,114N,115L,115M,115N cutoff portion
103V,113V,114V,115V,117C,171V one major surface
103Q,113Q,114Q,115Q,117D the other major surface
113W,113R,114W,114R,115W,115R,111P,112P,116A,116B,117A pattern
117A' bottommost portion
117M one surface
117N the other surface
151U,152U side surface
162S display surface
171 A base portion
1000 ultrasound fabrication apparatus
1010 housing
1011 upper stage plate
1012 support
1013 lower stage plate
1014 leg
1020 work table
1021 processing base
1021A suction hole
1022 vacuum pump
1023 suction pipe
1024 distributor
1025 connector
1030 transfer mechanism
1031 X-axis rail member
1031' auxiliary X-axis rail member
1032 Y-axis rail member
1033 Z-axis rail member
1033A movable table
1033B plate
1033C support block
1033D stopper member
1034 controller
1040 ultrasound processing portion
1041 support member
1042,1044 ultrasound processing horn
1042A vibrator
1042B tip portion
1043 ultrasound vibrator
1045 fabrication dot
1050 controller
1051 support member
1052 control panel
1053 display panel
1054 controlling device
E eye
P1 pitch
P2 half pitch
L1,L2 incident light
D light guide plate substrate

## Claims

1. An illumination device comprising:
an electric power receiving section supplied with electric power from an external portion;
a power source section connected to the electric power receiving section, converting the electric power into prescribed drive power;
a light source section connected to the power source section, emitting light according the drive power;
a housing section containing the light source section; and
a light guide section arranged to project from the housing section, outputting, from a branched outgoing surface, the light of the light source section entered from an incident surface.

2. The illumination device according to claim 1, wherein the outputting surface of the light guide section is formed with a recess or projecting pattern for outputting the light of the light source section as diffused light.

3. The illumination device according to claim 2, wherein the light guide section is formed with one or more of the outgoing surface.

4. The illumination device according to claim 1, wherein the light guide section has a cross section in a horizontal direction radially extending from a center of the housing section, and wherein the light guide section extends in a direction remoter from the incident surface and is formed with the outgoing surfaces facing each other.

5. The illumination device according to claim 1, wherein the light guide section is formed to extend in a cross shape when viewed in a perpendicular direction and has eight or more of the outgoing surfaces.

6. The illumination device according to claim 1, wherein the light guide section has a cross section in a horizontal direction extending in a shape, with a space inside, of a polygon, a circle, an oval, or a pyramid having a cross section made smaller as remoter from the incident surface.

7. The illumination device according to claim 1, wherein the light guide section has a cross section in a horizontal direction extending in a shape of a polygon, a circle, an oval, or a pyramid having a cross section made smaller as remoter from the incident surface.

8. The illumination device according to claim 1, wherein the light guide section has a cross section in a horizontal direction made larger or smaller as remoter from the incident surface.

9. The illumination device according to claim 1, wherein the light guide section is formed with plural light guide piece whose outgoing surface is branched.

10. The illumination device according to claim 9, wherein the light guide piece is provided in a plural number so as to make a length from the incident surface becomes equal or different.

11. The illumination device according to claim 9, wherein the light guide piece is formed with a curving surface or an inclined surface.

12. The illumination device according to claim 9, wherein the light guide piece is formed with a recess formed in a cylindrical shape or cone shape having a prescribed depth.

13. The illumination device according to claim 9, wherein the light guide piece is formed in a frustum of a pyramid shape or circular truncated cone shape.

14. The illumination device according to claim 9, wherein the light guide piece extended from the incident surface is formed in a shape of a polygon, a circle, an oval, or a pyramid having a cross section made smaller as remoter from the incident surface.

15. The illumination device according to claim 9, wherein the light guide piece is combined and formed in which the incident surface of one of the light guide pieces is inserted into a cutoff portion or projecting portion of another of the light guide pieces whose tip is branched off.

16. The illumination device according to claim 2, wherein the recess or projecting pattern is formed to the outgoing surfaces facing each other in a manner that the recess or projecting pattern is at the same position between the outgoing surfaces facing each other or at not the same position between the outgoing surfaces facing each other.

17. The illumination device according to claim 2, wherein the recess or projecting pattern is formed to the outgoing surfaces facing each other as to become deeper as located remoter from the incident surface.

18. The illumination device according to claim 2, wherein the recess pattern is formed by one or more of processes including a ultrasound process, a heating process, a cutting process, a laser process, and a molding process.

19. The illumination device according to claim 2, wherein the projecting pattern is formed by one or more of processes including a molding process, and a screen printing process.

20. The illumination device according to claim 1, wherein the light guide section is coated with a silicone coating agent or a glass coating agent, or is covered with a transparent resin.

21. The illumination device according to claim 1, wherein the light source section is disposed to extend radially from a center of the housing section.

22. The illumination device according to claim 21, wherein the light source section is arranged to extend radially in a manner of a three-way shape or a cross shape.

23. The illumination device according to claim 21, wherein the housing section is provided with a heat dissipating section for dissipating heat generated at the light source section.

24. The illumination device according to claim 1, wherein the housing section is formed with a holding section for fitting with and securing the light guide section, and wherein the holding section is formed with an untransparent reflection layer covering the light source section and reflecting light toward the light guide section.

25. The illumination device according to claim 24, wherein the holding section is formed with a securing hole for securing the housing section with a securing member, and wherein the securing hole is sealed with an adhesive containing a reflection material after the holding section is secured with the securing member.
